(19) Europäisches Patentamt
European Patent Office
Office européen des brevets

(11) Veröffentlichungsnummer: **0 438 696 B1**

(12) **EUROPÄISCHE PATENTSCHRIFT**

(45) Veröffentlichungstag der Patentschrift: **02.11.94**

(51) Int. Cl.⁵: **C08G 18/50**, C08G 18/66, C08G 18/79, C08G 18/80, //(C08G18/50,101:00)

(21) Anmeldenummer: **90123848.5**

(22) Anmeldetag: **11.12.90**

(54) **Verfahren zur Herstellung von elastischen, kompakten oder zelligen Formkörpern auf der Grundlage von N-substituierte Harnstoff- und Amidgruppen gebunden enthaltenden Elastomeren, derartige Elastomere und hierfür geeignete polyazomethinhaltige Polyoxyalkylen-polyamin-Mischungen.**

(30) Priorität: **02.01.90 DE 4000014**

(43) Veröffentlichungstag der Anmeldung: **31.07.91 Patentblatt 91/31**

(45) Bekanntmachung des Hinweises auf die Patenterteilung: **02.11.94 Patentblatt 94/44**

(84) Benannte Vertragsstaaten: **AT BE CH DE DK ES FR GB IT LI NL SE**

(56) Entgegenhaltungen: **EP-A- 0 284 253** **EP-A- 0 284 912**

(73) Patentinhaber: **BASF Aktiengesellschaft**
**Carl-Bosch-Strasse 38**
**D-67063 Ludwigshafen (DE)**

(72) Erfinder: **Becker, Johannes, Dr.**
**Ruedigerstrasse 124**
**W-6700 Ludwigshafen (DE)**
Erfinder: **Matzke, Guenter, Dr.**
**Oberdorfstrasse 5**
**W-6900 Heidelberg (DE)**
Erfinder: **Schmidt, Hans Ulrich**
**Odenwaldstrasse 25H**
**W-6103 Griesheim (DE)**
Erfinder: **Schoenleben, Willibald, Dr.**
**Blumenthalstrasse 41**
**W-6900 Heidelberg (DE)**

**EP 0 438 696 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind ein Verfahren zur Herstellung von elastischen, kompakten oder zelligen Formkörpern auf der Grundlage von N-substituierte Harnstoff- und Amidgruppen gebunden enthaltenden Elastomeren durch Umsetzung von organischen, gegebenenfalls modifizierten Polyisocyanaten mit einer polyazomethinhaltigen Polyoxyalkylen-polyamin-Mischung, die enthält mindestens ein Polyazomethin, vorzugsweise ein Polyketimin, mindestens ein Polyoxyalkylen-polyamin mit endständigen sekundären Aminogruppen und gegebenenfalls ein Polyoxyalkylen-polyamin mit endständigen primären Aminogruppen, und niedermolekularen alkylsubstituierten aromatischen Polyaminen, zweckmäßigerweise mit Hilfe der RIM-Technik, hierfür verwendbare neue polyazomethinhaltige Polyoxyalkylenpolyamin-Mischungen und die aus den genannten Aufbaukomponenten hergestellten Elastomeren.

Die Herstellung von Polyamid-Formkörpern durch aktivierte alkalische Lactampolymerisation wird z.B. ausführlich beschrieben in Kunststoff-Handbuch, Band VI, Polyamide, Carl Hanser Verlag, München, 1966, Seiten 46 bis 49. Schrumpfarme Polyamid-Formkörper können nach Angaben der EP-A-00 99 058 (US-A-4 590 242) hergestellt werden durch aktivierte alkalische Lactampolymerisation nach der Reaktionsspritzguß-Technik unter Zusatz eines ausgewählten Polymeren. Diese Verfahren sind apparativ aufwendig und daher kostspielig, da die Katalysator enthaltende Lactamschmelze und die Aktivator enthaltende Lactamschmelze vorzugsweise bei Temperaturen über 100 °C intensiv gemischt, in das Formwerkzeug transportiert und dort bei Temperaturen zwischen 130 und 200 °C polymerisiert werden müssen.

Dieser Nachteil kann mit Hilfe des Isocyanat-Polyadditionsverfahrens, insbesondere mit der RIM-Technik, bei dem die Ausgangsstoffe üblicherweise bei Raumtemperatur gemischt und in auf 40 bis 60 °C temperierten Formwerkzeugen zur Reaktion gebracht werden, beseitigt werden.

Ein Verfahren zur Herstellung von gegebenenfalls zelligen, elastischen Formkörpern mit einer geschlossenen Oberflächenschicht aus Polyurethan-Polyharnstoff-Elastomeren nach dem Prinzip der Reaktionsspritzgußtechnik (RIM) wird z.B. in der DE-B 26 22 951 (US 4 218 543) beschrieben. Die genannten Systeme bestehen im wesentlichen aus organischen Polyisocyanaten, Polyolen, reaktiven aromatischen Di- bzw. Polyaminen, die in o-Stellung zur Aminogruppe durch Alkylgruppen substituiert sind und starken Katalysatoren für die Reaktion zwischen Hydroxyl- und Isocyanatgruppen. Wesentlich hierbei ist, daß die aromatischen Di- bzw. Polyamine in jedem Verhältnis mit Polyolen des Molekulargewichts 12000 bis 1800 mischbar sind, die Alkylsubstituenten 1 bis 3 Kohlenstoffatome aufweisen, wobei mindestens zwei der Alkylsubstituenten 2 bis 3 Kohlenstoffatome besitzen und jede der o-Stellungen zu den Aminogruppen substituiert ist. Derartige Systeme besitzen Startzeiten bis herab zu weniger als einer Sekunde; der Übergang der flüssigen in die feste Phase erfolgt nahezu schlagartig, was dazu führt, daß das flüssige Reaktionsgemisch in der Form an deren Wandungen gleichsam erstarrt.

Es ist ferner bekannt, daß die Reaktivität von aromatisch gebundenen Aminogruppen gegenüber Isocyanaten durch elektronenanziehende Substituenten stark vermindert werden kann. Beispiele für derartige aromatische Diamine sind nach DE-C-12 16 538 (GB-PS 981 935) 3,3'-Dichlor-4,4'-diamino-diphenylmethan, 3,3'-Dinitro-4,4'-diamino-diphenylmethan und 3,3'-Dichlor-4,4'-diamino-diphenyl, deren Verarbeitung aus Bedenken hinsichtlich einer gesundheitsschädlichen Wirkung aufwendige und erschwerende Auflagen erfordert. Durch die stark elektronegativen Substituenten dieser Verbindungen wird jedoch die Reaktivität der aromatisch gebundenen Aminogruppen so stark herabgesetzt, daß die Durchhärtung bei nach der Reaktionsspritzgußtechnik hergestellten Formkörpern bis zu 15 Minuten erfordert und damit unwirtschaftlich wird.

Polyurethan-Polyharnstoff-Formulierungen mit im Vergleich zu Systemen gemäß DE-B 26 22 951 etwas verminderter Reaktivität werden nach Angaben der EP-A 026 915 erhalten, wenn man als aromatische Diamine 3,3',5,5'-tetraalkylsubstituierte 4,4'-Diamino-diphenylmethane verwendet, in denen die Alkylreste gleich oder verschieden sind und einen Methyl-, Ethyl-, Isopropyl-, sek.- oder tert.-Butylrest bedeuten, wobei mindestens einer der Substituenten ein Isopropyl- oder sek.-Butylrest sein muß. Die beschriebenen tetraalkylsubstituierten Diamino-diphenylmethane sind mit den Polyolen in den erforderlichen Mengen bei Raumtemperatur sehr gut mischbar und zeigen nur eine geringe oder gar keine Kristallisationsneigung, so daß die Formulierungen unter den für konventionelle RIM-Systeme üblichen Bedingungen gut handhabbar sind. Es zeigte sich jedoch auch, daß die beschriebenen tetraalkylsubstituierten 4,4'-Diamino-diphenylmethane für spezielle Anwendungen zu wenig reaktiv sein können.

Im Vergleich zu EP-A 026 915 etwas reaktivere Polyurethan-Polyharnstoff-Formulierungen werden in der EP-A 069 286 beschrieben. Als aromatische Diamine verwendet werden trialkylsubstituierte meta-Phenylendiamine, wobei zwei der Alkylsubstituenten gleich oder verschieden und lineare oder verzweigte Alkylreste mit 1 bis 4 C-Atomen sind und der 3. Alkylrest 4 bis 12 C-Atome aufweist oder ein fünf- oder sechsgliedriger Cycloalkylrest ist. Die Formulierungen weisen selbst bei einem relativ hohen Gehalt an

Diaminen eine ausreichende Fließfähigkeit auf und ergeben Formkörper mit einer hohen Wärmeformbeständigkeit, die keinen progressiven Abfall der Schubmodulkurven zwischen 100 und 200 °C zeigen.

Diese Verfahren weisen alle den Nachteil auf, daß der Reaktivitätsunterschied bei der Addition an Isocyanatgruppen zwischen den höhermolekularen Verbindungen mit mindestens zwei primären Hydroxylgruppen und den aromatischen Diaminen, trotz sterischer Behinderung der Aminogruppen beträchtlich ist und nur durch die Verwendung von synergistisch wirksamen Katalysatorkombinationen aus tertiären Aminen und Metallsalzen, z.B. Dibutylzinndilaurat, zur Beschleunigung der Hydroxyl-Isocyanat-Polyadditionsreaktion überwunden werden kann. Mit Metallsalzkatalysatoren hergestellte Polyurethan-Polyharnstoff-Elastomere depolymerisieren jedoch bei Temperaturen über 150 °C, wobei eine länger anhaltende Hochtemperatureinwirkung zur völligen Zerstörung der mechanischen Eigenschaften des Materials führen kann.

Bekannt ist ferner die teilweise oder ausschließliche Verwendung von Polyoxyalkylen-polyaminen mit Molekulargewichten von 1100 bis 16000 zur Herstellung von elastischen Polyurethan-Polyharnstoff- oder Polyharnstoff-Elastomeren z.B. aus den EP-A-033 498 (US 4 269 945), EP-A-81 701, EP-A-93 861 (US 4 396 729), EP-A-92 672, EP-A-93 862 (US 4 444 910 und US 4 433 067), EP-A-93 334 und EP-A-93 336.

Nach Angaben der beispielsweise genannten EP-A-81 701 können höhermolekulare Polyoxyalkylen-polyamine mit an aliphatische oder aromatische Reste gebundenen Aminogruppen verwendet werden. Aliphatische Polyoxyalkylen-polyamine sind jedoch bekanntermaßen äußerst reaktiv, so daß die Verarbeitung von RIM-Formulierungen auf dieser Grundlage, Z.B. aufgrund kurzer Schußzeiten und dadurch bedingtem geringem Materialaustrag, maschinentechnisch, insbesondere bei der Fertigung von voluminösen Formkörpern, zu erheblichen Problemen führen kann. Etwas langsamer als aliphatische Polyoxyalkylen-polyamine reagieren die Polyoxyalkylen-polyamine mit aromatisch gebundenen Aminogruppen. Nachteilig an diesen Verbindungen ist die kostspielige Herstellung in mehrstufigen Verfahren sowie insbesondere deren relativ hohe Viskosität, beispielsweise von mehr als 20 000 mPas bei 25 °C, die bei der Verarbeitung von Verstärkungsmittel enthaltenden Formulierungen große Schwierigkeiten bereiten kann.

Nach Angaben der US-A-4 552 945 können ferner Polyamid-Polyharnstoff-Elastomere nach dem RIM-Verfahren hergestellt werden durch Umsetzung von organischen Polyisocyanaten, höhermolekularen Verbindungen mit mindestens zwei reaktiven Wasserstoffatomen und einer Kombination von Kettenverlängerungsmitteln, die enthält ein spezielles Enamin, ein aromatisches Diamin und gegebenenfalls ein Diol. Derartige Formulierungen zeigen eine langsamere Gelzeit und ermöglichen die Befüllung größerer Formwerkzeuge.

Bekannt ist ferner die Reduzierung der Aminogruppenreaktivität von Polyoxyalkylen-polyaminen zur Herstellung von mikrozellularen oder geschäumten Formkörpern durch partielle Überführung der Aminogruppen mit Kohlendioxid in Ammoniumcarbamatgruppen entsprechend den Angaben der EP-B-0 109 605 (US-A-4 499 038) und EP-B-0 135 867 (US-A-4 645 630).

Eine andere Methode zur Reduzierung der Aminreaktivität von höhermolekularen Polyoxyalkylen-polyaminen mit endständigen primären Aminogruppen und zur Herstellung von Polyamid- und Polyharnstoffgruppen gebunden enthaltenden Elastomeren beruht auf der Verwendung von Polyazomethinen, vorzugsweise Polyketiminen, als höhermolekulare Aufbaukomponente mit mindestens zwei reaktiven Wasserstoffatomen. Elastomere, hergestellt nach diesem Verfahren werden beschrieben in der EP-A-0 284 912 (US 4 789 691), EP-A-0 284 253 und EP-A-0 284 254, wobei gemäß EP-A-0 284 254 als höhermolekulare Verbindungen mit mindestens zwei reaktiven Wasserstoffatomen Mischungen aus Polyoxyalkylen-polyolen und Polyoxyalkylen-polyaminen mit primären und/oder sekundären Aminogruppen eingesetzt werden. Nachteilig an Formulierungen, die zusätzlich zu Iminogruppen, sowohl Hydroxylgruppen als auch verschiedenartige Aminogruppen als reaktive Gruppen enthalten, ist insbesondere die stark unterschiedliche Reaktivität der Ausgangsstoffe, die einer äußerst diffizilen Katalyse bedarf, und die damit verbundenen Verarbeitungsschwierigkeiten. Die Azomethinmodifizierung führt außer der Reaktivitätsreduzierung zu einer Erhöhung der Funktionalität, da die Iminfunktion mit Isocyanaten in der Enaminform sowohl über den Stickstoff zu Harnstoffbindungen als auch über den $\beta$-Kohlenstoff zu Amidbindungen abreagieren kann.

Nach Angaben der EP-A-0 298 359 können Elastomere, die N-Alkylharnstoffeinheiten oder N-Alkylharnstoff- und Urethaneinheiten gebunden enthalten, hergestellt werden durch Umsetzung von Polyisocyanaten mit Kettenverlängerungsmitteln und N-Alkyl-polyoxyalkylen-polyaminen mit 2 bis 12 Kohlenstoffatomen in der Alkylgruppe. Formulierungen aus diesen Aufbaukomponenten können auch nach der RIM-Technik zu Formkörpern verarbeitet werden. Nachteilig an diesen N-Alkyl-polyoxyalkylen-polyaminen ist jedoch, daß die erhaltenen Reaktionsmischungen wegen der hohen Aminreaktivität nur schlecht fließfähig sind und dadurch große Formvolumen, insbesondere wenn die Formwerkzeuggeometrie enge Querschnitte aufweist, nur unzureichend gefüllt werden können.

Bekannt ist ferner die Verwendung von Isocyanatgruppen enthaltenden Prepolymeren und Quasiprepolymeren mit NCO-Gehalten zwischen 9 und 31 Gew.%, die unter Verwendung von gegebenenfalls

modifiziertem 4,4'-Diphenylmethan-diisocyanat hergestellt wurden, aus den US-Patentschriften 4 048 105, 4 102 833 und 4 374 210 in Polyurethan-Systemen.

Durch die Auswahl geeigneter höhermolekularer Verbindungen mit mindestens zwei reaktiven Wasserstoffatomen, wie z.B. Polyether- und/oder Polyester-polyolen, Polyoxyalkylen-polyaminen mit an aliphatische oder aromatische Reste gebundenen primären und/oder sekundären Aminogruppen, oder insbesondere entsprechend substituierter aromatischer primärer Diamine als Kettenverlängerungsmittel sowie von speziellen Katalysatoren oder Katalysatorsystemen versuchte man die RIM-Formulierungen den gegebenen Erfordernissen, wie z.B. Volumen und Geometrie des Formwerkzeugs, anzupassen. Nachteilig an dieser Methode ist jedoch, daß durch die eingesetzten Ausgangsverbindungen nicht nur die Reaktivität der RIM-Formulierungen, sondern auch die mechanischen Eigenschaften der erhaltenen Formkörper beeinflußt werden, so daß Formkörper mit bestimmten Raumformen und größeren Abmessungen teilweise nicht oder nur mit verminderten mechanischen Eigenschaften hergestellt werden können, da die Reaktionsmischungen beispielsweise nicht ausreichend fließfähig sind oder in den erforderlichen Mengen nicht in das Formwerkzeug eingebracht werden können oder die erhaltenen Formteile eine unzureichende Anfangsfestigkeit (green strength) besitzen und daher nach kurzen Formstandzeiten nicht problemlos entformt werden können.

Die Aufgabe der vorliegenden Erfindung bestand darin, die Fließfähigkeit der Reaktionsmischung zur Herstellung von elastischen, kompakten oder zelligen Formkörpern zu verbessern, ohne die Anfangssteifigkeit oder die mechanischen Eigenschaften des hergestellten Formteils zu verschlechtern. Durch geeignete Variation der Systemzusammensetzung sollte die Fließfähigkeit der Reaktionsmischung in Abhängigkeit von der Formwerkzeuggeometrie und dem Füllvolumen gezielt eingestellt werden können.

Verbessert werden sollten außerdem die Reißdehnung und Weiterreißfestigkeit der Elastomerformteile.

Diese Aufgabe konnte überraschenderweise gelöst werden durch die Verwendung einer polyazomethinhaltigen Polyoxyalkylen-polyamin-Mischung als höhermolekulare Verbindungen zur Bildung der Weichsegmente in den Elastomeren.

Gegenstand der Erfindung ist somit ein Verfahren zur Herstellung von elastischen, kompakten oder zelligen Formkörpern auf der Grundlage von N-substituierte Harnstoff- und Amidgruppen gebunden enthaltenden Elastomeren durch Umsetzung von

a) mindestens einem organischen und/oder modifizierten organischen Polyisocyanat, vorzugsweise einem aromatischen Polyisocyanat und/oder einer modifizierten aromatischen Polyisocyanatmischung mit einem NCO-Gehalt von 8 bis 33,6 Gew.-%, bezogen auf das Gewicht der Polyisocyanatmischung, mit

b) einer polyazomethinhaltigen Polyoxyalkylen-polyamin-Mischung und

c) mindestens einem alkylsubstituierten primären aromatischen Diamin, das in ortho-Stellung zu den Aminogruppen mindestens einen Alkylsubstituenten besitzt, mit einem Molekulargewicht bis 500

in Gegenwart oder Abwesenheit von

d) Katalysatoren sowie gegebenenfalls

e) Treibmitteln,

f) Hilfsmitteln und/oder

g) Zusatzstoffen

das dadurch gekennzeichnet ist, daß die polyazomethinhaltige Polyoxyalkylen-polyamin-Mischung (b) enthält oder vorzugsweise besteht aus

bi) mindestens einem Polyazomethin, vorzugsweise einem Polyketimin, ausgewählt aus Reaktionsprodukten aus Polyoxyalkylen-polyaminen mit 2 bis 4 an aromatische oder aliphatische Reste gebundenen primären Aminogruppen und einem durchschnittlichen Molekulargewicht von 1100 bis 8000 und mindestens einem organischen Aldehyd und/oder organischen Keton,

bii) mindestens einem Polyoxyalkylen-polyamin mit einem Molekulargewicht von 1100 bis 8000 und 2 bis 4 endständig gebundenen sekundären Aminogruppen der Formel RNH-, wobei R ein linearer oder verzweigter Alkylrest mit 1 bis 12 Kohlenstoffatomen, ein Cycloalkylrest mit 4 bis 10 Kohlenstoffatomen, der Benzylrest, ein mit Halogenatomen, vorzugsweise Fluor- oder Chloratomen, Nitro-, Alkyl- oder Alkoxygruppen mit 1 bis 12 Kohlenstoffatomen, oder Amino- oder Carboxylgruppen an der Phenylgruppe substituierter Benzylrest, der Phenylrest oder eine Alkylphenylgruppe mit 1 bis 12 Kohlenstoffatomen im Alkylrest ist und gegebenenfalls

biii) mindestens einem Polyoxyalkylen-polyamin mit 2 bis 4 endständigen primären Aminogrupen und einem Molekulargewicht von 1100 bis 8000 Gegenstände der Erfindung sind ferner spezielle Ausgestaltungen des erfindungsgemäßen Verfahrens nach den Ansprüchen 2 bis 11 wobei zweckmäßigerweise in der Polyoxyalkylen-polyamin-Mischung (b) ausgewählte sekundäre Polyoxyalkylen-polyamine (bii) Anwendung finden, das Verhältnis von Aldimin- und/oder vorzugsweise Ketimingruppen zu sekundären

Aminogruppen in (b) kleiner als 1 ist und die kompakten oder zelligen Formkörper vorteilhafterweise nach der RIM-Technik in einem geschlossenen temperierten Formwerkzeug hergestellt werden.

Gegenstände der Erfindung sind außerdem geeignete polyazomethinhaltige Polyoxyalkylen-polyamin-Mischungen gemäß den Ansprüchen 12 bis 14 zur Herstellung der Formkörper nach dem erfindungsgemäßen Verfahren und N-substituierte Harnstoffgruppen und Amidgruppen gebunden enthaltende, elastische, kompakte oder zellige Elastomere, hergestellt durch Umsetzung von

a) mindestens einem organischen und/oder modifizierten organischen Polyisocyanat mit

b) einer polyazomethinhaltigen Polyoxyalkylen-polyamin-Mischung, die enthält oder vorzugsweise besteht aus

bi) mindestens einem Polyaldimin und/oder vorzugsweise Polyketimin wie oben beschrieben

bii) mindestens einem Polyoxyalkylen-polyamin mit endständigen sekundären Aminogruppen wie oben beschrieben und gegebenenfalls

biii) mindestens einem Polyoxyalkylen-polyamin mit endständigen primären Aminogruppen

und

c) mindestens einem alkylsubstituierten aromatischen Diamin mit einem Molekulargewicht bis 500, wie oben beschrieben

in Gegenwart oder Abwesenheit von

d) Katalysatoren

sowie gegebenenfalls

e) Treibmitteln,

f) Hilfsmitteln und/oder

g) Zusatzstoffen

mit der Maßgabe, daß das Verhältnis von Aldimin- und/oder Ketimingruppen zu sekundären Aminogruppen in der Polyoxyalkylen-polyamin-Mischung (b) kleiner als 1 ist.

Die erfindungsgemäß hergestellten elastischen Formkörper auf der Grundlage von N-substituierte Harnstoff- und Amidgruppen gebunden enthaltenden Elastomeren zeigen eine gute Steifigkeit, höhere Reißdehnung und eine verbesserte Weiterreißfestigkeit. Die Reaktionsmischungen zu ihrer Herstellung weisen eine verbesserte Fließfähigkeit und verlängerte Gelzeit auf, so daß die Austragsmengen mit handelsüblichen Hochdruckspritzgußmaschinen deutlich gesteigert werden und auch voluminöse Formwerkzeuge problemlos befüllt werden können. Vorteilhaft ist insbesondere, daß durch Variation der Mengenverhältnisse von Aldimin- und/oder Ketimingruppen zu sekundären Aminogruppen bestimmte Fließeigenschaften der Reaktionsmischung gezielt eingestellt werden können.

Diese Eigenschaftsänderungen waren nicht vorhersehbar, da durch die alleinige Verwendung von Polyoxyalkylen-polyaldiminen und/oder -polyketiminen anstelle von Polyoxyalkylen-polyaminen die Fließeigenschaften der Reaktionsmischung nur unzureichend verlängert werden und die erhaltenen Elastomeren zwar eine gute Steifigkeit, jedoch eine geringe Dehnung besitzen. Bei Verwendung von Polyoxyalkylen-polyaminen mit sekundären endständigen Aminogruppen anstelle von solchen mit primären Aminogruppen werden Reaktionsmischungen mit verlängerten Fließwegen erhalten, wobei sich die mechanischen Eigenschaften der erhaltenen Elastomeren im wesentlichen nicht verändern.

Zu den zur Herstellung der N-substituierte Harnstoff- und Amidgruppen gebunden enthaltenden Elastomeren verwendbaren Ausgangsstoffen und den hieraus bestehenden Formkörpern ist im einzelnen folgendes auszuführen.

a) Als organische Polyisocyanate kommen die an sich bekannten aliphatischen, cycloaliphatischen und vorzugsweise aromatischen mehrwertigen Isocyanate in Frage. Im einzelnen seien beispielhaft genannt: 1,6-Hexamethylen-diisocyanat, 1-Isocyanato-3,5,5-trimethyl-3-isocyanatomethyl-cyclohexan, 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, Mischungen aus 4,4'-, 2,2'- und 2,4'-Dicyclohexylmethan-diisocyanaten und Polymethylen-polycyclohexylen-polyisocyanaten, 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'-, 2,4'- und 2,2'-Diphenylmethan-diisocyanaten und Polyphenyl-polymethylen-polyisocyanaten(Roh-MDI) und Mischungen aus Roh-MDI und Toluylen-diisocyanaten.

Häufig werden auch sogenannte modifizierte mehrwertige Isocyanate, d.h. Produkte, die durch chemische Umsetzung obiger Di- und/oder Polyisocyanate erhalten werden, verwendet. Beispielhaft genannt seien Ester-, Harnstoff-, Biuret-, Allophanat- und vorzugsweise Carbodiimid-, Isocyanurat- und/oder Urethangruppen enthaltende Di- und/oder Polyisocyanate. Im einzelnen kommen beispielsweise in Betracht: Urethangruppen enthaltende aromatische Polyisocyanate mit NCO-Gehalten von 33,6 bis 8 Gew.%, vorzugsweise von 31 bis 21 Gew.%, beispielsweise mit niedermolekularen Diolen, Triolen,

Oxyalkylenglykolen, Dioxyalkylenglykolen oder Polyoxyalkylen-glykolen mit Molekulargewichten bis 800 modifiziertes 4,4'-Diphenylmethan-diisocyanat oder Toluylen-diisocyanat, wobei als Di- bzw. Polyoxyalkylen-glykole, die einzeln oder als Gemische eingesetzt werden können, beispielsweise genannt seien: Diethylen-, Dipropylen-, Polyoxyethylen-, Polyoxypropylen- und Polyoxypropylen-polyoxyethylen-glykole. Geeignet sind auch NCO-Gruppen enthaltende Prepolymere mit NCO-Gehalten von 25 bis 8 Gew.%, vorzugsweise von 21 bis 14 Gew.%. Bewährt haben sich ferner flüssige Carbodiimidgruppen und/oder Isocyanuratringe enthaltende Polyisocyanate mit NCO-Gehalten von 33,6 bis 8 Gew.-%, vorzugsweise 31 bis 21 Gew.%, z.B. auf Basis von 4,4'-, 2,4'- und/oder 2,2'-Diphenylmethan-diisocyanat und/oder 2,4- und/oder 2,6-Toluylen-diisocyanat und vorzugsweise 2,4- und 2,6-Toluylen-diisocyanat sowie die entsprechenden Isomerengemische, 4,4'-, 2,4'- und 2,2'-Diphenylmethan-diisocyanat sowie die entsprechenden Isomerengemische z.B. aus 4,4'- und 2,4'-Diphenylmethan-diisocyanaten, Roh-MDI und Gemische aus Toluylen-diisocyanaten und Roh-MDI.

Insbesondere kommen jedoch zur Anwendung: (i) Carbodiimid- und/oder Urethangruppen enthaltende Polyisocyanate aus 4,4'-Diphenylmethan-diisocyanat oder einer Mischung aus 4,4'- und 2,4'-Diphenylmethan-diisocyanaten mit einem NCO-Gehalt von 33,6 bis 8 Gew.%, (ii) NCO-Gruppen enthaltende Prepolymere mit einem NCO-Gehalt von 8 bis 25 Gew.%, bezogen auf das Prepolymergewicht, hergestellt durch Umsetzung von Polyoxyalkylen-polyolen mit einer Funktionalität von 2 bis 4 und einem Molekulargewicht von 600 bis 6000 mit 4,4'-Diphenylmethan-diisocyanat oder einer Mischung aus 4,4'- und 2,4'-Diphenylmethan-diisocyanaten und Mischungen aus (i) und (ii).

Zur Herstellung der NCO-Gruppen enthaltenden Prepolymeren eignen sich, wie bereits dargelegt wurde, Polyoxyalkylen-polyole mit einer Funktionalität von 2 bis 4, vorzugsweise 2 bis 3 und insbesondere 3 und einem Molekulargewicht von 600 bis 6000, vorzugsweise von 2800 bis 4500. Analoge Polyoxyalkylen-polyole mit Molekulargewichten von ungefähr 180 bis 8 000 werden eingesetzt zur Polyoxyalkylen-polyaminherstellung, der gegebenenfalls mitverwendbaren Aufbaukomponente (biii) zur Herstellung der erfindungsgemäßen Elastomeren und geeigneter Ausgangsstoff zur Herstellung der Polyazomethine (bi) und der N-substituierten Polyoxyalkylen-polyamine (bii). Derartige Polyoxyalkylen-polyole können nach bekannten Verfahren, beispielsweise durch anionische Polymerisation mit Alkalihydroxiden, wie Natrium- oder Kaliumhydroxid, oder Alkalialkoholaten, wie Natrium-methylat, Natrium-oder Kaliumethylat oder Kaliumisopropylat als Katalysatoren oder durch kationische Polymerisation mit Lewis-Säuren, wie Antimonpentachlorid, Bortrifluorid-Etherat u.a. oder Bleicherde als Katalysatoren aus einem oder mehreren Alkylenoxiden mit 2 bis 4 Kohlenstoffatomen im Alkylenrest und einem Startermolekül, das 2 bis 4, vorzugsweise 2 oder 3 reaktive Wasserstoffatome gebunden enthält, hergestellt werden.

Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan.

Als Startermoleküle kommen ferner in Betracht: Alkanolamine, Dialkanolamine und/oder Trialkanolamine, wie z.B. Ethanolamin, Diethanolamin, N-Methyl- und N-Ethyl-ethanolamin, N-Methyl- und N-Ethyl-diethanolamin und Triethanolamin sowie Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan und Pentaerythrit.

Die Polyoxyalkylen-polyole können einzeln oder in Form von Mischungen zur Modifizierung der organischen Polyisocyanate verwendet werden.

b) Als höhermolekulare Verbindungen mit mindestens zwei reaktiven Wasserstoffatomen zur Bildung der Weichsegmente in den Elastomeren werden erfindungsgemäß polyazomethinhaltige Polyoxyalkylen-polyamin-Mischungen (b) verwendet, die enthalten oder vorzugsweise bestehen aus

bi) mindestens einem Polyazomethin, z.B. einem Polyaldimin oder vorzugsweise einem Polyketimin,

bii) mindestens einem Polyoxyalkylen-polyamin mit endständigen sekundären Aminogruppen und gegebenenfalls

biii) mindestens einem Polyoxyalkylen-polyamin mit endständigen primären Aminogruppen.

bi) Polyazomethine (bi) im Sinne der Erfindung sind Reaktionsprodukte aus Polyoxyalkylen-polyaminen mit 2 bis 4, vorzugsweise 2 bis 3 an aromatische oder vorzugsweise an aliphatische Reste

gebundenen primären Aminogruppen und einem durchschnittlichen Molekulargewicht von 1100 bis 8000, vorzugsweise von 1100 bis 5500 und insbesondere 1800 bis 3500 und mindestens einem organischen Aldehyd und/oder vorzugsweise mindestens einem organischen Keton.

Die vorzugsweise zur Anwendung kommenden Polyoxyalkylen-polyamine mit an aliphatische Reste gebundenen Aminogruppen können nach bekannten Verfahren, beispielsweise durch Cyanoalkylierung der beschriebenen Polyoxyalkylen-polyole und anschließende Hydrierung des gebildeten Nitrils (US-A-3 267 050) oder durch Aminierung von Polyoxyalkylen-polyolen mit Ammoniak in Gegenwart von Wasserstoff und Katalysatoren (DE-A-12 15 373) hergestellt werden.

Geeignete Polyoxyalkylen-polyamine mit an aromatische Reste gebundenen Aminogruppen können beispielsweise hergestellt werden durch Umsetzung der oben beschriebenen Polyoxyalkylenpolyole mit aromatischen Polyisocyanaten im Verhältnis von NCO-:OH-Gruppen von mindestens 2 und anschließende Hydrolyse der erhaltenen aromatische NCO-Gruppen aufweisenden Prepolymeren zu Polyaminen analog den Verfahren der DE-A-29 48 419, DE-A-30 39 600, EP-A-84 141, EP-A-79 512, EP-A-97 290, EP-A-97 298, EP-A-97 299, EP-A-99 537, EP-A-113 027, EP-A-113 020 oder EP-A-154 768.

Die Polyoxyalkylen-polyamine können als Einzelverbindungen oder in Form von Mischungen aus Produkten mit unterschiedlichen Molekulargewichten und Funktionalitäten verwendet werden. Bei Verwendung von Polyoxyalkylen-polyolen mit Molekulargewichten kleiner als 180, z.B. von niedermolekularen Polyoxyethylen-glykolen, als Ausgangskomponente ist erforderlich, daß die erhaltenen Polyoxyalkylen-polyamine mit höhermolekularen Polyoxyalkylen-polyaminen in einer solchen Menge gemischt werden, daß das durchschnittliche Molekulargewicht 1100 bis 8 000 bei einer Funktionalität von 2 bis 4 beträgt. Als Polyoxyalkylen-polyamine verwendbar sind ferner Mischungen aus Polyoxyalkylen-polyolen und Polyoxyalkylen-polyaminen und/oder teilweise aminierten Polyoxyalkylen-polyolen unter der Voraussetzung, daß die reaktiven Endgruppen im wesentlichen, d.h. zweckmäßigerweise zu mehr als 95 %, insbesondere zu mehr als 98 % Aminogruppen sind und diese zweckmäßigerweise zu mindestens 85 %, vorzugsweise zu mehr als 90 % aus primären Aminogruppen bestehen.

Als andere Ausgangskomponente zur Herstellung der Polyazomethine (bi) finden organische, vorzugsweise aliphatische und/oder cycloaliphatische Aldehyde und/oder insbesondere organische, vorzugsweise aliphatische und/oder cycloaliphatische Ketone oder Mischungen aus den genannten Verbindungen Verwendung. Als geeignete Aldehyde seien beispielsweise genannt: Acetaldehyd, 3-Methoxi-, 3-Ethoxi-, 3-Propoxi-, 3-Isopropoxi-, 3-n-Butoxi- und 2-Ethyl-hexoxi-2,2-dimethyl-propanal, 2-Formylisobuttersäurealkylester mit 1 bis 4 Kohlenstoffatomen im Alkylrest z.B. 2-Formylisobuttersäureethylester, 3-(Methyl-carbonyloxi)- und 3-(Isopropyl-carbonyloxi)-2,2-dimethyl-propanal, (Methoxiacetoxi)-2,2-dimethyl-propanal, 2-Acetoxi-2-methyl-propanal und insbesondere 2-Formylisobuttersäuremethylester und 2,2-Dimethylpropanal. Als aliphatische und/oder vorzugsweise cycloaliphatische Ketone kommen beispielsweise in Betracht: Aceton, Methylethylketon, Diethylketon, Methylpropylketon, Methyl-isopropylketon, Methyl-n-butylketon, Diisopropylketon, Phenyl-methylketon, vorzugsweise Methylisobutylketon, Methylcyclohexanon und insbesondere Cyclopentanon und Cyclohexanon.

Zur Herstellung der Polyazomethine aus der Gruppe der Polyaldimine und vorzugsweise der Polyketimine werden die Polyoxyalkylen-polyamine, vorzugsweise die Polyoxyalkylen-di- und/oder -triamine mit einem überschuß mindestens eines Aldehyds und/oder vorzugsweise Ketons, vorzugsweise in einem -$NH_2$/-CHO- bzw. $>$CO-Verhältnis von 1:1 bis 5, insbesondere von 1:1,1 bis 4 gemischt und zweckmäßigerweise nach Zusatz eines geeigneten Lösungs- oder Verdünnungsmittels, wie z.B. Toluol, Xylol, Benzol, Methylenchlorid, Dichlorethan, Cyclohexan, n-Hexan oder Heptan und gegebenenfalls einer anorganischen oder organischen Säure, wie z.B. Salzsäure, Ameisensäure oder Benzoesäure oder Arylsulfonsäure, wie z.B. p-Toluolsulfonsäure als Katalysator, so lange in Gegenwart eines unter den Reaktionsbedingungen inerten Gases am Wasserabscheider erhitzt, bis die theoretisch zu erwartende oder bei partieller Reaktion, die gewünschte Wassermenge abgetrennt ist. Üblicherweise sind hierzu Reaktionszeiten von 1 bis 60, vorzugsweise 5 bis 40 Stunden erforderlich. Derartige Verfahren werden z.B. beschrieben in Houben-Weyl, Methoden der organischen Chemie, Band VII/2b, Teil II, Georg Thieme Verlag, Stuttgart 1976, 4. Aufl., Seiten 1948 ff.

Eine Reinigung der Polyazomethine, beispielsweise durch Filtration, ist üblicherweise nicht notwendig. Die Polyazomethine können nach Abdestillieren des überschüssigen Aldehyds und/oder Ketons und, falls in Gegenwart eines Lösungs- oder Verdünnungsmittels kondensiert wurde, des vorzugsweise eingesetzten Lösungs- oder Verdünnungsmittels direkt zur Herstellung der erfindungsgemäßen Elastomeren verwendet werden.

Als Polyazomethine besonders geeignet sind Polyketimine, die hergestellt werden durch Umsetzung von Polyoxyalkylen-polyaminen mit einer Funktionalität von 2 bis 4 und einem Molekulargewicht

von 180 bis 8 000, ausgewählt aus der Gruppe der Polyoxyethylen-polyamine, Polyoxypropylen-polyamine, Polyoxytetramethylen-polyamine, Polyoxypropylen-polyoxyethylen-polyamine, Polyoxytetramethylen-polyoxypropylen- und/oder -polyoxyethylen-polyamine, mit aliphatischen und/oder cycloaliphatischen Ketonen ausgewählt aus der Gruppe Methylisobutylketon, Methylcyclohexanon und vorzugsweise Cyclohexanon und Cyclopentanon, wobei zur Herstellung der erfindungsgemäßen N-substituierte Harnstoff- und Amidgruppen enthaltenden Elastomeren jedoch erfindungsgemäß Polyoxyalkylen-polyamine oder -mischungen mit einem durchschnittlichen Molekulargewicht von 1100 bis 8000, vorzugsweise 1100 bis 5500, eingesetzt werden.

bii) Als sekundäre Polyoxyalkylen-polyamine (bii) finden erfindungsgemäß zweckmäßigerweise solche mit einem Molekulargewicht von 1100 bis 8000, vorzugsweise von 1600 bis 4500 und 2 bis 4, vorzugsweise 2 oder 3 endständig gebundenen RNH-Gruppen Verwendung, wobei R ist

ein linearer oder verzweigter Alkylrest mit 1 bis 12 Kohlenstoffatomen, vorzugsweise 4 bis 10 Kohlenstoffatomen wie z.B. ein Methyl-, Ethyl-, n-Propyl, iso-Propyl, n-, sek.- oder tert.-Butyl-, Amyl-, n-Hexyl-, 2-Ethyl-hexyl-, Octyl-, 2-Ethyl-octyl-, Decyl- oder Dodecylrest,

ein Cycloalkylrest mit 4 bis 10 Kohlenstoffatomen, vorzugsweise 5 oder 6 Kohlenstoffatomen, wie z.B. der Cyclobutyl-, Cycloheptyl-, Cyclooctylrest und vorzugsweise der Cyclopentyl- oder Cyclohexylrest,

ein mit Halogenatomen, vorzugsweise Fluor- oder Chloratomen, Nitro-, Alkyl- oder Alkoxygruppen mit 1 bis 12 Kohlenstoffatomen, vorzugsweise 1 bis 6 Kohlenstoffatomen, oder vorzugsweise Amino- oder Carboxylgruppen an der Phenylgruppe substituierter Benzylrest,

der Benzylrest,

eine Alkylphenylgruppe mit 1 bis 12 Kohlenstoffatomen, vorzugsweise 1 bis 2 Kohlenstoffatomen im Alkylrest und

der Phenylrest.

Vorzugsweise Anwendung finden N,N'-Dipropyl-, N,N'-Dibutyl-, N,N'-Dipentyl-, N,N'-Dicyclopentyl-, N,N'-Dicyclohexyl-, N,N'-Diphenyl-polyoxyalkylen-diamine oder die entsprechenden N,N',N''-trisubstituierten Polyoxyalkylen-triamine und insbesondere N,N'-Dibenzyl-polyoxyalkylen-diamine mit einem Molekulargewicht von 410 bis ungefähr 8000 und N,N'-N''-Tribenzyl-polyoxyalkylen-triamine mit einem Molekulargewicht von 710 bis ungefähr 8000 oder Mischungen dieser N-Benzyl-polyoxyalkylen-di und -triamine, wobei die Polyoxyalkylenreste zweckmäßigerweise ausgewählt sind aus der Gruppe der Polyoxyethylen-, Polyoxypropylen-, Polyoxytetramethylen-, Polyoxypropylen-polyoxyethylen-, Polyoxytetramethylen-polyoxypropylen- und/oder polyoxyethylenreste und vorzugsweise Polyoxypropylen- und Polyoxypropylen-polyoxyethylenreste sind.

Die erfindungsgemäß verwendbaren sekundären Polyoxyalkylen-polyamine können beispielsweise hergestellt werden durch Hydrierung der oben beschriebenen Polyoxyalkylen-polyaldimine und/oder -polyketimine, wobei zur Polyoxyalkylen-polyaldimin- oder -polyketiminherstellung ihrerseits vorzugsweise Propionaldehyd, Butyraldehyd, Cyclopentanon, Cyclohexanon und insbesondere Benzaldehyd eingesetzt werden. Zur Polyoxyalkylen-polyaldimin- oder -polyketimin-herstellung verwendbar sind jedoch auch andere lineare oder verzweigtkettige aliphatische Aldehyde oder Ketone mit 1 bis 12 Kohlenstoffatomen, vorzugsweise 4 bis 10 Kohlenstoffatomen, wie z.B. Acetaldehyd, Propionaldehyd, Isobutyraldehyd, n-Valeraldehyd, Isovaleraldehyd, n-Capronaldehyd oder n-Heptaldehyd, Aceton, Methylethylketon, Methyl-n-propylketon Diethylketon, Hexanon-2 oder -3, Methyl-tert.butylketon, Di-n-oder -iso-propylketon, Diisobutylketon oder Di-n-amylketon, Cycloalkanone mit 4 bis 10 Kohlenstoffatomen, wie z.B. Cyclobutanon, Cycloheptanon, Cyclooctanon und vorzugsweise Cyclopentanon und Cyclohexanon und substituierte Benzaldehyde, wie z.B. mit Fluor- und/oder Chloratomen, Nitro-, Alkylgruppen mit 1 bis 12 Kohlenstoffatomen, Alkoxygruppen mit 1 bis 12 Kohlenstoffatomen und vorzugsweise mit Amino- oder Carboxylgruppen substituierter Benzaldehyd.

Die Hydrierung der Polyoxyalkylen-polyaldimine oder -polyketimine kann nach an sich bekannten Methoden z.B. in Gegenwart von Katalysatoren in Lösung oder vorzugsweise lösungsmittelfrei bei erhöhten Temperaturen drucklos oder vorzugsweise unter Druck durchgeführt werden. Nach einem bevorzugt angewandten Verfahren werden die Polyoxyalkylenpolyaldimine oder -polyketimine in Gegenwart von Raney-Nickel lösungsmittelfrei bei einer Temperatur im Bereich von 60 bis 200 °C, vorzugsweise 100 bis 160 °C und einem Druck von 20 bis 500 bar, vorzugsweise 150 bis 230 bar innerhalb eines Zeitraums von 2 bis 50 Stunden, vorzugsweise 5 bis 18 Stunden hydriert. Das erhaltene Hydriergemisch wird anschließend unter Druck filtriert und die flüchtigen Bestandteile aus dem Filtrat unter vermindertem Druck bei Temperaturen von 100 bis 200 °C abgetrennt.

Die erhaltenen N-substituierten Polyoxyalkylen-polyamine können ohne weitere Reinigung direkt zur Herstellung der erfindungsgemäßen Elastomeren eingesetzt werden.

Nach einer anderen Herstellungsart können die Polyoxyalkylen-polyole auch direkt mit aliphatischen oder gegebenenfalls substituierten aromatischen primären Aminen in Gegenwart von Katalysatoren zu N-substituierten Polyoxyalkylen-polyaminen umgesetzt werden. Als hierfür geeignete primäre Amine seien beispielhaft genannt: Methyl-, Ethyl-, n- oder Isopropyl-, sek.- oder tert.Butyl-, Lauryl-, Cyclohexylamin oder Anilin.

biii) Die erfindungsgemäß verwendbaren polyazomethinhaltigen Polyoxyalkylen-polyamin-Mischungen (b) können neben den erfindungswesentlichen Polyoxyalkylen-polyaldiminen und/oder -polyketiminen (bi) und Polyoxyalkylen-polyaminen mit endständigen sekundären Aminogruppen (bii) die oben beschriebenen Polyoxyalkylen-polyamine (biii) mit endständigen primären Aminogruppen als zusätzliche Aufbaukomponente enthalten, wobei diese zweckmäßigerweise 2 bis 4, vorzugsweise 2 oder 3 primäre Aminogruppen gebunden enthalten und ein Molekulargewicht von 1 100 bis 8 000 vorzugsweise von 1 600 bis 4 500 besitzen.

Die erfindungsgemäß verwendbaren polyazomethinhaltigen Polyoxyalkylen-polyamin-Mischungen (b) besitzen vorteilhafterweise insbesondere ein Verhältnis von Aldimin- und/oder Ketimingruppen zu sekundären Aminogruppen von kleiner als 1, wobei die Mischungen im einzelnen z.B. zweckmäßigerweise enthalten:

9 bis 49 %, vorzugsweise 9 bis 30 % Aldimin- und/oder Ketimingruppen,

20 bis 91 %, vorzugsweise 35 bis 80 % endständige sekundäre Aminogruppen und

0 bis 71 %, vorzugsweise 0 bis 45 % endständige primäre Aminogruppen,

wobei die Prozente bezogen sind auf die Gesamtzahl an Aldimin-, Ketimingruppen, endständigen sekundären und endständigen primären Aminogruppen in der polyazomethinhaltigen Polyoxyalkylen-polyamin-Mischung (b) und die Komponenten (bi) bis (biii) jeweils ein durchschnittliches Molekulargewicht von 2000 bis 3000 besitzen.

Da die einzelnen Aufbaukomponenten (bi) bis gegebenenfalls (biii) Molekulargewichte von 1100 bis 8000 besitzen, können ihre Mengenverhältnisse in Abhängigkeit vom Molekulargewicht über einen breiten Bereich variiert werden. Unter der Maßgabe, daß die Aufbaukomponenten (bi), (bii) und gegebenenfalls (biii) jeweils ein durchschnittliches Molekulargewicht von 2000 bis 3000 aufweisen, enthalten oder vorzugsweise bestehen die entsprechenden polyazomethinhaltigen Polyoxyalkylen-polyamin-Mischungen (b), bezogen auf 100 Gew.-Teile, üblicherweise aus:

6 bis 59 Gew.-Teilen, vorzugsweise 6 bis 39 Gew.-Teilen mindestens eines Polyazomethins (bi),

11 bis 94 Gew.-Teilen, vorzugsweise 26 bis 86 Gew.-Teilen mindestens eines Polyoxyalkylen-polyamins mit endständigen sekundären Aminogruppen (bii) und

0 bis 79 Gew.-Teilen, vorzugsweise 0 bis 55 Gew.-Teilen mindestens eines Polyoxyalkylen-polyamins mit endständigen primären Aminogruppen (biii).

Derartige polyazomethinhaltige Polyoxyalkylen-polyamin-Mischungen (b) können beispielsweise erhalten werden durch Mischen von vorab hergestellten Polyoxyalkylen-polyaldiminen und/oder -polyketiminen (bi) mit separat hergestellten Polyoxyalkylen-polyaminen mit endständigen sekundären Aminogruppen (bii) und gegebenenfalls Polyoxyalkylen-polyaminen mit endständigen primären Aminogruppen (biii). Nach anderen zur Anwendung kommenden Verfahrensweisen können die eingesetzten Polyoxyalkylen-polyamine lediglich mit unterschüssigen Mengen an Aldehyden und/oder Ketonen zur Reaktion gebracht werden, so daß die vorliegenden Aminogruppen nur partiell in Azomethingruppen übergeführt werden oder die durch vollständige oder teilweise Umsetzung von Polyoxyalkylen-polyaminen mit Aldehyden und/oder Ketonen erhaltenen Polyazomethine können bei der anschließenden Hydrierung partiell oder im wesentlichen quantitativ in die entsprechenden sekundären Amine übergeführt werden.

(c) Als alkylsubstituierte aromatische Polyamine mit Molekulargewichten bis 500, vorzugsweise von 122 bis 400, werden zweckmäßigerweise primäre aromatische Diamine verwendet, die in ortho-Stellung zu den Aminogruppen mindestens einen Alkylsubstituenten besitzen, welcher die Reaktivität der Aminogruppe durch sterische Hinderung vermindert, die bei Raumtemperatur flüssig und mit den polyazomethinhaltigen Polyoxyalkylen-polyamin-Mischungen (b) unter den Verarbeitungsbedingungen zumindest teilweise, vorzugsweise jedoch vollständig mischbar sind. Bewährt haben sich beispielsweise alkylsubstituierte meta-Phenylendiamine der Formeln

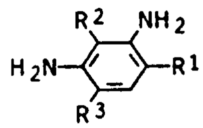 und/oder 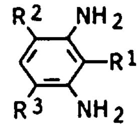 ,

in denen $R^3$ und $R^2$ gleich oder verschieden sind und einen Methyl-, Ethyl-, Propyl- oder Isopropylrest bedeuten und $R^1$ ein linearer oder verzweigter Alkylrest mit 1 bis 10, vorzugsweise 1 bis 6 Kohlenstoffatomen ist. Gut bewährt haben sich auch verzweigte Alkylreste $R^1$ mit 4 bis 6 Kohlenstoffatomen, bei denen die Verzweigungsstelle am $C_1$-Kohlenstoffatom sitzt. Als Reste $R^1$ seien beispielhaft genannt der Methyl-, Ethyl-, Isopropyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl-, Cyclohexyl-, 1-Methyl-n-propyl-, tert.-Butyl-, 1-Ethyl-n-propyl-, 1-Methyl-n-butyl- und 1,1-Dimethyl-n-propylrest.

Als alkylsubstituierte m-Phenylendiamine kommen beispielsweise in Betracht: 2,4-Dimethyl-6-cyclohexyl-, 2-Cyclohexyl-4,6-diethyl-, 2-Cyclohexyl-2,6-isopropyl-, 2,4-Dimethyl-6-(1-ethyl-n-propyl)-,2,4-Dimethyl-6-(1,1-dimethyl-n-propyl)-, 2-(1-Methyl-n-butyl)-4,6-dimethyl-phenylendiamin-1,3. Vorzugsweise verwendet werden 1-Methyl-3,5-diethyl-2,4- und/oder -2,6-phenylendiamine, 2,4-Dimethyl-6-tert.-butyl-, 2,4-Dimethyl-6-isooctyl- und 2,4-Dimethyl-6-cyclohexyl-phenylendiamin-1,3.

Geeignet sind ferner 3,3'-di- und/oder 3,3',5,5'-tetra-n-alkyl-substituierte 4,4'-Diamino-diphenylmethane wie z.B. 3,3'-Dimethyl-, 3,3'-Diethyl-, 3,3'-Di-n-propyl-, 3,3',5,5'-Tetramethyl-, 3,3',5,5'-Tetraethyl- und 3,3',5,5'-Tetra-n-propyl-4,4'-diamino-diphenylmethan.

Als alkylsubstituierte 4,4'-Diamino-diphenylmethane finden vorzugsweise solche der Formel

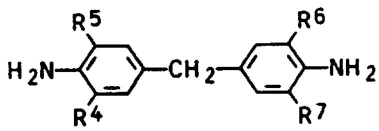

Verwendung, in der $R^4$, $R^5$, $R^6$ und $R^7$ gleich oder verschieden sind und einen Methyl-, Ethyl-, Propyl-, Isopropyl-, sek.-Butyl- und tert. -Butylrest bedeuten, wobei jedoch mindestens einer der Reste ein Isopropyl- oder sek.-Butylrest sein muß. Die 4,4'-Diamino-diphenylmethane können auch im Gemisch mit Isomeren der Formeln

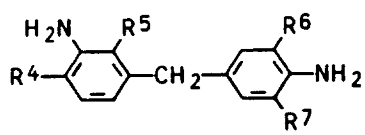 und/oder 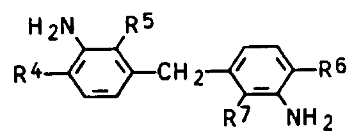

verwendet werden, wobei $R^4$, $R^5$, $R^6$ und $R^7$ die oben genannte Bedeutung haben.

Beispielhaft genannt seien: 3,3',5-Trimethyl-5'-isopropyl-, 3,3',5-Triethyl-5'-isopropyl-, 3,3',5-Trimethyl-5'-sek.-butyl-, 3,3',5-Triethyl-5'-sek.butyl-4,4'-diamino-diphenylmethan, 3,3'-Dimethyl-5,5'-diisopropyl-, 3,3'-Diethyl-5,5'diisopropyl-, 3,3'-Dimethyl-5,5'-di-sek.-butyl-, 3,3'-Diethyl-5,5'-di-sek.-butyl-, 3,5-Dimethyl-3',5'-diisopropyl-, 3,5-Diethyl-3',5'-diisopropyl-, 3,5'-Dimethyl-3',5-di-sek.-butyl-, 3,5-Diethyl-3',5'-di-sek.-butyl-4,4'-diamino-diphenylmethan, 3-Methyl-3',5,5'-triisopropyl-, 3-Ethyl-3',5,5'-triisopropyl-, 3-Methyl-3'-ethyl-5,5'-diisopropyl-,3-Methyl-3',5,5'-tri-sek.-butyl-, 3-Ethyl-3',5,5'-tri-sek.-butyl-4,4'-diamino-diphenylmethan, 3,3'-Diisopropyl-5,5'-di-sek.-butyl-, 3,5-Diisopropyl-3',5'-di-sek.-butyl-, 3-Ethyl-5-sek.-butyl-3',5'-diisopropyl-, 3-Methyl-5-tert.-butyl-3',5'-diisopropyl-, 3-Ethyl-5-sek.-butyl-3'-methyl-5'-tert.-butyl-, 3,3',5,5'-Tetraisopropyl- und 3,3',5,5'-Tetra-sek.-butyl-4,4'-diamino-diphenylmethan. Vorzugsweise verwendet werden 3,5-Dimethyl-3',5'-diisopropyl- und 3,3',5,5'-Tetraisopropyl-4,4'-diamino-diphenylmethan. Die Diamino-diphenylmethane könnnen einzeln oder in Form von Mischungen eingesetzt werden.

Zur Herstellung der N-substituierten Harnstoff- und Amidgruppen gebunden enthaltenden Elastomeren und Formkörper hieraus werden vorzugsweise die technisch gut zugänglichen 1,3,5-Triethyl-2,4-phenylendiamin, 1-Methyl-3,5-diethyl-2,4-phenylendiamin, Mischungen aus 1-Methyl-3,5-diethyl-2,4- und -2,6-phenylendiaminen, sogenanntes DETDA, Isomerengemische aus 3,3'-di- oder 3,3',5,5'-tetraalkylsubstituierten 4,4'-Diamino-diphenylmethanen mit 1 bis 4 C-Atomen im Alkylrest, insbesondere Methyl-,

Ethyl- und Isopropylreste gebunden enthaltende 3,3',5,5'-tetralkylsubstituierte 4,4'-Diamino-diphenylmethane sowie Gemische aus den genannten tetraalkylsubstituierten 4,4'-Diamino-diphenylmethanen und DETDA verwendet.

Zur Herstellung der erfindungsgemäßen Elastomeren werden die organischen Polyisocyanate und/oder modifizierten Polyisocyanatmischungen (a), polyazomethinhaltige Polyoxyalkylen-polyamin-Mischung (b) und alkylsubstituierten primären aromatische Polyamine (c) in solchen Mengen zur Reaktion gebracht, daß das Äquivalenz-Verhältnis von NCO-Gruppen der Komponente (a) zur Summe der reaktiven Wasserstoffatome der Komponenten (b) und (c) 0,85 bis 1,25:1, vorzugsweise 0,95 bis 1,15:1 und insbesondere 0,98 bis 1,10:1 beträgt und das Verhältnis der Summe aus Aldimin- und/oder Ketimingruppen, sekundären Aminogruppen und gegebenenfalls primären Aminogruppen der Komponente (b) zu primären aromatischen Aminogruppen der Komponente (c) 90:10 bis 10:90, vorzugsweise 40:60 bis 15:85 ist.

(d) Die erfindungsgemäßen N-substituierte Harnstoff- und Amidgruppen gebunden enthaltende Elastomere werden vorzugsweise in Abwesenheit von Katalysatoren hergestellt. Sofern jedoch Katalysatoren Anwendung finden, werden insbesondere stark basische Amine eingesetzt, wobei zur Erzielung von wärmebeständigen Formkörpern, die der on-line-Lackierung unterworfen werden können, die Abwesenheit von synergistisch wirkenden organischen Metallverbindungen z.B. organischen Zinnverbindungen, zwingend erforderlich ist. Als geeignete Katalysatoren seien beispielsweise genannt: Amidine, wie z.B. 2, 3-Dimethyl-3,4,5,6-tetrahydropyrimidin und tertiäre Amine, wie z.B. Triethylamin, Tributylamin, N,N-Dimethylbenzylamin, N-Methyl-, N-Ethyl-, N-Cyclohexylmorpholin, N,N,N',N'-Tetramethyl-ethylendiamin, N,N,N',N'-Tetramethyl-butandiamin, N,N,N',N'-Tetramethyl-hexamethylendiamin, N,N,N',N'',N''-Pentamethyl-diethylentriamin, N,N,N',N'-Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetralkylammoniumhydroxide, wie z.B. Tetramethylammoniumhydroxid, Alkalihydroxide, wie z.B. Natriumhydroxid und Alkalialkoholate, wie z.B. Natriummethylat und Kaliumisopropylat sowie Alkalisalze von langkettigen Fettsäuren mit 10 bis 20 C-Atomen und gegebenenfalls seitenständigen OH-Gruppen. Verwendet werden üblicherweise 0,001 bis 5 Gew.%, vorzugsweise 0,05 bis 2 Gew.% Katalysator, bezogen auf das Gewicht der Komponente (b).

Zur Herstellung von elastischen Formkörpern auf Basis der erfindungsgemäßen N-substituierte Harnstoff- und Amidgruppen gebunden enthaltenden Elastomeren können der Reaktionsmischung aus den Komponenten (a) bis (c) sowie gegebenenfalls (d) gegebenenfalls Treibmittel (e) zur Erzielung zelliger Formkörper sowie gegebenenfalls Hilfsmittel (f) und/oder Zusatzstoffe (g) einverleibt werden.

e) Als Treibmittel zur Herstellung von zelligen Formkörpern eignet sich z.B. Wasser, das mit Isocyanatgruppen unter Bildung von Kohlendioxid reagiert. Das Wasser kann hierbei in Substanz oder in chemisch oder physikalisch gebundener Form, z.B. in Form von tert. Butanol, als Kristallwasser oder gebunden an Zeolithe, eingesetzt werden unter der Voraussetzung, daß das Wasser unter den Reaktionsbedingungen zur Bildung der Elastomeren freigesetzt wird. Die Wassermengen, die zweckmäßigerweise verwendet werden können, betragen 0,1 bis 1,0, vorzugsweise 0,2 bis 0,4 Gew.%, bezogen auf das Gewicht der Komponenten (b) und (c).

Andere verwendbare Treibmittel sind niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan, 1,1,2-Trichlor-1,2,2-trifluorethan, Trifluormethan, Difluormethan, Difluorethan, Tetrafluorethan und Heptafluorpropan, Kohlenwasserstoffe, wie n- und iso-Butan, n- und iso-Pentan sowie die technischen Gemische dieser Kohlenwasserstoffe, Propan, Propylen, Hexan, Heptan, Cyclobutan, Cyclopentan, Cyclohexan, Dialkylether, wie Dimethylether, Diethylether und Furan, Carbonsäureester, wie Methyl-, Ethylformiat und Aceton. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von zellhaltigen Formkörpern aus N-substituierten harnstoff- und amidgruppenhaltigen Elastomeren hängt ab von der Dichte, die man erreichen will sowie gegebenenfalls von der Mitverwendung von Wasser. Im allgemeinen liefern Mengen von 1 bis 15 Gew.%, vorzugsweise 2 bis 11 Gew.%, bezogen auf das Gewicht der Komponenten (b) und (c), zufriedenstellende Ergebnisse.

(f) und (g): Als geeignete Hilfsmittel (f) und/oder Zusatzstoffe (g) seien beispielhaft genannt: oberflächenaktive Substanzen, Schaumstabilisatoren, Zellregler, Füllstoffe, Verstärkungsmittel, Flammschutzmittel, äußere und/oder innere Trennmittel, Farbstoffe, Pigmente, Hydrolyseschutzmittel, fungistatisch und bakteriostatisch wirkende Substanzen.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäure-ester, Türkischrotöl und Erdnußöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteile der Komponenten (b) und (c) angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zu Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum und Zeolithe, Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, u. a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit und insbesondere Glasfasern verschiedener Länge, die gegebenenfalls geschlichtet sein können. Als organische Füllstoffe kommen beispielsweise in Betracht: Kohle, Kohlefasern, Melamin, Kollophonium, Cyclopentadienylharze und Pfropfpolymerisate auf Styrol-Acrylnitrilbasis, die durch in situ Polymerisation von Acrylnitril-Styrol-Mischungen in Polyoxyalkylen-polyolen analog den Angaben der deutschen Patentschriften 11 11 394, 12 22 669, (US 3 304 273, 3 383 351, 3 523 093), 11 52 536 (GB 1 040 452) und 11 52 537 (GB 987 618) hergestellt und danach aminiert werden sowie Filler-polyoxyalkylen-polyamine, bei denen wäßrige Polymerdispersionen in Polyoxyalkylen-polyamin-dispersionen übergeführt werden.

Die anorganischen und organischen Füllstoffe können einzeln oder als Gemische verwendet werden. Vorzugsweise Anwendung finden ungeschlichtete oder geschlichtete Kurzglasfasern mit Längen kleiner als 0,4 mm, vorzugsweise kleiner als 0,2 mm.

Die anorganischen und/oder organischen Füllstoffe und/oder Verstärkungsmittel werden der Reaktionsmischung vorteilhafterweise in Mengen von 0,5 bis 35 Gew.%, vorzugsweise 3 bis 20 Gew.%, bezogen auf das Gewicht der Komponenten (a) bis (c), einverleibt.

Geeignete Flammschutzmittel sind beispielsweise Trikresylphosphat, Tris-2-chlorethylphosphat, Trischlorpropylphosphat und Tris-2,3-dibrompropylphosphat.

Außer den bereits genannten halogensubstituierten Phosphaten können auch anorganische Flammschutzmittel, wie z.B. Aluminiumoxidhydrat, Antimontrioxid, Arsenoxid, Ammoniumpolyphosphat und Calciumsulfat oder Melamin oder Mischungen davon zum Flammfestmachen der Formkörper verwendet werden. Im allgemeinen hat es sich als zweckmäßig erwiesen, 5 bis 50 Gew.-Teile, vorzugsweise 5 bis 25 Gew.-Teile der genannten Flammschutzmittel für jeweils 100 Gew.-Teile der Komponenten (b) und (c) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Die elastischen, kompakten Formkörper auf Basis der erfindungsgemäßen N-substituierte harnstoff- und amidgruppenhaltigen Elastomeren werden zweckmäßigerweise nach dem one shot-Verfahren mit Hilfe der Niederdruck-Technik oder insbesondere der Reaktionsspritzguß-Technik (RIM) in offenen oder vorzugsweise geschlossenen Formwerkzeugen, hergestellt. Zur Herstellung der zelligen Formkörper wird die Reaktion insbesondere unter Verdichtung in einem geschlossenen Formwerkzeug durchgeführt. Die Reaktionsspritzguß-Technik wird beispielsweise beschrieben von H. Piechota und H. Röhr in "Integralschaumstoffe", Carl Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics,

März/April 1973, Seiten 76-84.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem Zweikomponenten-Verfahren zu arbeiten und die Aufbaukomponenten (b) und (c) und gegebenenfalls (d) bis (g) in der Komponente (A) zu vereinigen und als Komponente (B) die organischen Polyisocyanate oder modifizierte Polyisocyanatmischungen zu verwenden.

Vorteilhaft ist hierbei beispielsweise, daß die Komponenten (A) und (B) getrennt gelagert und raumsparend transportiert werden können und bei der Verarbeitung nur noch in den entsprechenden Mengen gemischt werden müssen.

Die Menge des in das Formwerkzeug eingebrachten Reaktionsgemisches wird so bemessen, daß die erhaltenen gegebenenfalls zelligen Formkörper eine Dichte von 250 bis 1400 kg/m$^3$ besitzen, wobei die kompakten Formkörper eine Dichte vorzugsweise von 1000 bis 1400 kg/m$^3$` und insbesondere von 1000 bis 1200 kg/m$^3$, die zelligen und mikrozellularen Formkörper vorzugsweise eine Dichte von 400 bis 1100 kg/m$^3$, z.B. für Schuhsohlen von 450 bis 750 kg/m$^3$, insbesondere von 550 bis 650 kg/m$^3$ und für Verkleidungselemente von 700 bis 1200 kg/m$^3$, insbesondere von 950 bis 1150 kg/m$^3$ aufweisen. Die Ausgangskomponenten werden mit einer Temperatur von 15 bis 80 °C, vorzugsweise von 30 bis 65 °C in das Formwerkzeug eingebracht. Die Formwerkzeugtemperatur beträgt zweckmäßigerweise 20 bis 110 °C, vorzugsweise 35 bis 95 °C und insbesondere 35 bis 75 °C. Die Verdichtungsgrade zur Herstellung der mikrozellularen oder zelligen Formkörper liegen zwischen 1,1 und 8, vorzugsweise zwischen 2 und 6.

Obgleich die erfindungsgemäß hergestellten Elastomer-Formkörper trennfreundlich sind, kann es zur Verbesserung der Entformung vorteilhaft sein, die Formwerkzeuginnenflächen zumindest zu Beginn einer Produktionsreihe mit üblichen äußeren Formtrennmitteln, beispielsweise auf Wachs- oder Silikonbasis, zu beschichten. Insbesondere bewährt haben sich jedoch und daher vorzugsweise verwendet werden innere Formtrennmittel, wie sie beispielsweise beschrieben werden in der EP-A-153 639, EP-A-180 749 (AU 85/47 498), EP-A-173 888 (US 4 519 965), WO 84/03288 (EP-A-119 471) und WO 86/01215. Die Formstandzeiten betragen in Abhängigkeit von der Größe und Geometrie des Formteils durchschnittlich 3 bis 60 Sekunden.

Die erfindungsgemäßen N-substituierte harnstoff- und aminogruppenhaltigen Elastomeren enthalten vorzugsweise keine Urethangruppen gebunden, da durch diese üblicherweise die Wärmeformbeständigkeit beeinträchtigt wird. Die Produkte zeichnen sich durch gute mechanische Eigenschaften aus und weisen eine Rohdichte nach DIN 53420 von 800 bis 1400 kg/m$^3$, eine Reißfestigkeit nach DIN 53504 von 15 bis 55 N/mm$^2$, vorzugsweise von 20 bis 45 N/mm$^2$, eine Reißdehnung nach DIN 53504 von 20 bis 400 %, vorzugsweise von 50 bis 350 %, eine Weiterreißfestigkeit nach DIN 53515 von 25 bis 140 N/mm$^2$, vorzugsweise von 30 bis 120 N/mm$^2$, eine Shore-D-Härte nach DIN 53505 von 20 bis 80, vorzugsweise von 30 bis 77, einen Biege-E-Modul nach DIN 53457 von 200 bis 2200 und eine Wärmeformbeständigkeit (HDT) nach ISO-75/B (DIN 53 461) von 80 bis 210 °C, vorzugsweise von 90 bis 205 °C auf.

Die nach dem erfindungsgemäßen Verfahren erhältlichen kompakten Formkörper finden insbesondere Verwendung in der Kraftfahrzeug- und Flugzeugindustrie, beispielsweise als Stoßstangenabdeckungen, Rammschutzleisten, Karosserieteile, wie z.B. Regenrinnen, Kotflügel, Spoiler, Radkastenverbreiterungen sowie für andere technische Gehäuseteile und Laufrollen. Die zelligen Formkörper eignen sich für Schuhsohlen, Armlehnen, Kopfstützen, Sonnenblenden, Sicherheitsabdeckungen in Fahrzeugkabinen, sowie als Motorrad-, Traktor- oder Fahrradsattel, Sitzkissen und Deckschichten in Verbundkörpern.

Beispiel 1

a) Herstellung von N,N'-Polyoxypropylen-dibenzylimin.
6000 Gew.-Teile eines Polyoxypropylen-diamins der Struktur

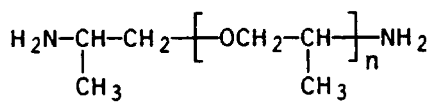

und mit einem mittleren Molekulargewicht von 2000 (n ≈ 33) wurden in einem 10 Liter Dreihalskolben, ausgerüstet mit Rührer, Tropftrichter und Destilliervorrichtung auf 50 °C temperiert. Unter intensivem Rühren ließ man hierzu

1300 Gew.-Teile einer Lösung, die bestand aus
650 Gew.-Teilen Benzaldehyd und
650 Gew.-Teilen Cyclohexan
innerhalb einer Stunde zutropfen und rührte noch 15 Minuten bei 50 °C nach.

Die flüchtigen Bestandteile der Reaktionsmischung wurden nun bei einer Sumpftemperatur bis 100 °C zuerst bei Normaldruck und anschließend unter stetiger Druckreduzierung bis auf 2 bis 3 mbar abgetrennt. Man erhielt als Rückstand 6500 Gew.-Teile N,N'-Polyoxypropylen-dibenzylimin, das ohne weitere Reinigung hydriert wurde.

b) Herstellung von N,N'-Dibenzyl-polyoxypropylen-diamin.

In einem 10 Liter Autoklav wurden 6000 Gew.-Teile des nach Beispiel 1a hergestellten N,N'-Polyoxypropylen-dibenylimins in Gegenwart von 250 Gew.-Teilen Raney-Nickel, das zuvor mit Methanol und Cyclohexan gewaschen worden war, mit Wasserstoff bei einer Temperatur von 130 °C und unter einem Druck von 200 bar über einen Zeitraum von 20 Stunden hydriert. Nach der Entspannung des Autoklavs wurde die Reaktionsmischung unter Druck filtrierte und anschließend die flüchtigen Bestandteile abgetrennt bei 5 mbar und einer maximalen Sumpftemperatur von 150 °C.

Man erhielt in praktisch quantitativer Ausbeute N,N'-Dibenzyl-polyoxypropylen-diamin.

Beispiel 2

a) Herstellung von N,N',N''-Polyoxypropylen-tribenzylimin

6000 Gew.-Teile eines Polyoxypropylen-triamins der Struktur

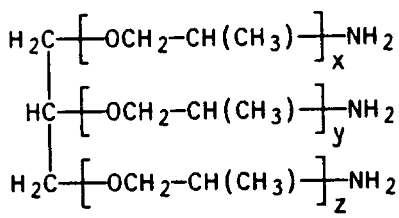

und mit einem mittleren Molekulargewicht von 3000 (x + y + z ≈ 50) wurden analog den Angaben des Beispiels 1a mit
1300 Gew.-Teilen einer Lösung, die bestand aus
650 Gew.-Teilen frisch destilliertem Benzaldehyd und
650 Gew.-Teilen Cyclohexan
zur Reaktion gebracht.

Man erhielt als Rückstand 6800 Gew.-Teile N,N',N''-Polyoxypropylen-tribenzylimin, das ohne weitere Reinigung hydriert wurde.

b) Herstellung von N,N',N''-Tribenzyl-polyoxypropylen-triamin

6800 Gew.-Teile des nach Beispiel 2a hergestellten N,N',N''-Polyoxypropylen-tribenzylimins wurden analog den Angaben des Beispiels 1b hydriert.

Man erhielt in praktisch quantitativer Ausbeute N,N',N''-Tribenzyl-polyoxypropylen-triamin.

Beispiel 3

a) Herstellung von N,N'-Polyoxypropylen-dicyclopentylimin

2500 Gew.-Teile eines Polyoxypropylen-diamins der Struktur

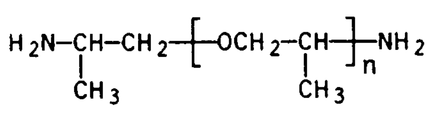 ,

mit einem mittleren Molekulargewicht von 2000 (n ≈ 33) und mit mindestens 91 % primären Aminogruppen wurden mit

881 Gew.-Teilen einer Lösung, die bestand aus

231 Gew.-Teilen Cyclopentanon und

650 Gew.-Teilen Toluol

bei Raumtemperatur gemischt und die erhaltene Reaktionsmischung so lange unter Rückflußkühlung am Wasserabscheider erhitzt, bis sich kein Wasser mehr abschied (Dauer ca. 9 Stunden). Danach wurde das Toluol und überschüssiges Cyclopentanon unter vermindertem Druck bei einer Temperatur von 100 bis 120 °C abdestilliert.

Man erhielt als Rückstand 2700 Gew.-Teile N,N'-Polyoxypropylen-dicyclopentylimin, das ohne weitere Reinigung hydriert wurde

b) Herstellung von N,N'-Dicyclopentyl-polyoxypropylen-diamin

2700 Gew.-Teile des nach Beispiel 3a hergestellten N,N'-Polyoxypropylen-di-cyclopentylimins wurden in einem 10 Liter Autoklav in Gegenwart von 250 Gew.-Teilen Raney-Nickel, das zuvor mit Tetrahydrofuran gewaschen worden war, mit Wasserstoff bei einer Temperatur von 130 °C bei 200 bar 8 Stunden lang hydriert.

Nach der Entspannung des Autoklavs wurde die Reaktionsmischung mit Hilfe eines Druckfilters filtriert und danach die flüchtigen Bestandteile abgetrennt bei einem Druck von 2 mbar und einer maximalen Sumpftemperatur von 150 °C.

Man erhielt in praktisch quantitativer Ausbeute N,N'-Dicyclopentyl-polyoxypropylen-diamin, das ohne weitere Reinigung zur Herstellung der Elastomeren Verwendung fand.

Beispiel 4

a) Herstellung von N,N'-Polyoxypropylen-dibutylimin

6000 Gew.-Teile eines Polyoxypropylendiamins mit einem mittleren Molekulargewicht von 2000 und mehr als 96 % primären Aminogruppen wurde in der in Beispiel 1a beschriebenen Vorrichtung auf 50 °C temperiert.

Unter intensivem Rühren ließ man hierzu

1020 Gew.-Teile einer Lösung, die bestand aus

510 Gew.-Teile Butyraldehyd und

510 Gew.-Teile Cyclohexan

innerhalb einer Stunde zutropfen und rührte noch 15 Minuten bei 50 °C nach.

Die flüchtigen Bestandteile der Reaktionsmischung wurden nun bei einer Sumpftemperatur bis 100 °C zuerst bei Normaldruck und anschließend unter stetiger Druckreduzierung bis auf 2 bis 3 mbar abgetrennt.

Man erhielt als Rückstand 6130 Gew.-Teile N,N'-Polyoxypropylen-dibutylimin, das ohne weitere Reinigung hydriert wurde.

b) Herstellung von N,N'-Dibutyl-polyoxypropylen-diamin

Die Hydrierung wurde analog den Angaben des Beispiels 1b unter Einsatz von 6000 Gew.-Teilen des oben beschriebenen N,N'-Polyoxypropylen-dibutylimins durchgeführt.

Man erhielt in praktisch quantitativer Ausbeute N,N'-Dibutyl-polyoxypropylen-diamin.

Herstellung von N-Benzylharnstoff- und Amidgruppen enthaltenden Elastomeren

Beispiel 5

A-Komponente:

Mischung aus

15 Gew.-Teilen N,N'-Polyoxypropylen-dicyclopentylimin, hergestellt nach den Angaben des Beispiels 3a,

25,5 Gew.-Teilen Polyoxypropylen-diamin mit einem mittleren Molekulargewicht von 2000 und mindestens 91 % primären Aminogruppen,

26,5 Gew.-Teilen N,N' Dibenzyl-polyoxypropylen-diamin, hergestellt nach den Angaben der Beispiele 1a und 1b,

29,0 Gew.-Teilen einer Mischung aus 1-Methyl-3,5-diethyl-phenylendiamin-2,4 und 1-Methyl-3,5-diethylphenylendiamin-2,6 im Gewichtsverhältnis 80:20, in den folgenden Beispielen abgekürzt als DETDA bezeichnet,

2,0 Gew.-Teilen Zinkstearat und

2,0 Gew.-Teilen N,N'-Polyoxypropylen-dicyclohexylimin, hergestellt durch Umsetzung eines Polyoxypropylen-diamins mit einem mittleren Molekulargewicht von 230 und mehr als 91 % primären Aminogruppen und Cyclohexanon.

B-Komponente:

Mit Carbodiimidgruppen modifizierte Polyisocyanatmischung mit einem NCO-Gehalt von 20,0 Gew.-% auf der Grundlage von 4,4'-Diphenylmethan-diisocyanat.

Die Komponenten A und B wurden im Mischungsverhältnis 100:94,7 Gew.-Teilen auf einer Hochdruckdosieranlage vom Typ Puromat® 30 der Elastogran Polyurethane GmbH, Geschäftsbereich Maschinenbau, gemischt und in ein auf 65 °C temperiertes metallisches Formwerkzeug mit den Innenabmessungen 400 x 200 x 4 mm eingespritzt. Die Temperatur der A-Komponente betrug 65 °C und die der B-Komponente 50 °C.

Der Fließweg der Reaktionsmischung betrug bei einer Formtemperatur von 65 °C 172 cm, gemessen mittels eines S-förmigen Fließkanals mit einem Durchmesser von 10 mm und der obengenannten Hochdruckdosieranlage mit einer Austragsleistung von 300 g/sek bei einer Schußzeit von 1 Sek. Die Anfangshärte, gemessen 40 Sek. nach Öffnung des Formwerkzeugs, war 48 Shore D.

An dem eine Stunde bei 160 °C getemperten Formteil wurden folgende mechanischen Daten gemessen:

| | | |
|---|---|---|
| Rohdichte | DIN 53420 [kg/m$^3$] | 1139 |
| Reißfestigkeit | DIN 53504 [N/mm$^2$] | 33 |
| Reißdehnung | DIN 53504 [%] | 144 |
| Weiterreißfestigkeit | DIN 53515 [N/mm$^2$] | 31 |
| Härte | DIN 53505 [Shore D] | 73 |
| Biege-E-Modul | DIN 53457 [N/mm$^2$] | 685 |
| Wärmeformbeständigkeit (HDT) nach ISO-75/B | DIN 53461 [°C] | 153 |

Beispiel 6

A-Komponente:

Mischung aus

15 Gew.-Teilen N,N'-Polyoxypropylen-dicyclopentylimin, hergestellt nach den Angaben des Beispiels 3a,

52,0 Gew.-Teilen N,N'-Dibenzyl-polyoxypropylen-diamin, hergestellt nach den Angaben der Beispiele 1a und 1b,

29,0 Gew.-Teilen DETDA,

2,0 Gew.-Teilen Zinkstearat und

2,0 Gew.-Teilen N,N'-Polyoxypropylen-dicyclohexylimin, hergestellt durch Umsetzung eines Polyoxypropylen-diamins mit einem mittleren Molekulargewicht von 230 und mehr als 91 % primären Aminogruppen und Cyclohexanon.

B-Komponente: analog Beispiel 5

Die Komponenten A und B wurden im Mischungsverhältnis A:B = 100:93,2 Gew.-Teilen analog den Angaben des Beispiels 5 zu Formteilen umgesetzt.

Der Fließweg der Reaktionsmischung betrug bei einer Formtemperatur von 65 °C 180 cm, gemessen analog den Angaben des Beispiels 5.

Die Anfangshärte, gemessen 40 Sek. nach Öffnung des Formwerkzeugs, war 49 Shore D

An dem eine Stunde bei 160 °C getemperten Formteil wurden folgende mechanische Daten gemessen:

| | | |
|---|---|---|
| Rohdichte | DIN 53420 [kg/m³] | 1113 |
| Reißfestigkeit | DIN 53504 [N/mm²] | 32 |
| Reißdehnung | DIN 53504 [%] | 130 |
| Weiterreißfestigkeit | DIN 53515 [N/mm²] | 25 |
| Härte | DIN 53505 [Shore D] | 72 |
| Biege-E-Modul | DIN 53457 [N/mm²] | 703 |
| Wärmeformbeständigkeit (HDT) nach ISO-75/B | DIN 53461 [°C] | 160 |

Beispiel 7

A-Komponente:

Mischung aus

30,0 Gew.-Teilen N,N'-Polyoxypropylen-dicyclopentylimin, hergestellt nach den Angaben des Beispiels 3a,

37,0 Gew.-Teilen N,N' -Dibenzyl-polyoxypropylen-diamin, hergestellt nach den Angaben der Beispiele 1a und 1b,

29,0 Gew.-Teilen DETDA,

2,0 Gew.-Teilen Zinkstearat und

2,0 Gew.-Teilen N,N'-Polyoxypropylen-dicyclohexylimin, hergestellt durch Umsetzung eines Polyoxypropylen-diamins mit einem mittleren Molekulargewicht von 230 und mehr als 91 % primären Aminogruppen und Cyclohexanon.

B-Komponente: analog Beispiel 5

Die Komponenten A und B wurden im Mischungsverhältnis A:B = 100:92,6 Gew.-Teilen analog den Angaben des Beispiels 5 zu Formteilen umgesetzt.

Der Fließweg der Reaktionsmischung betrug bei einer Formtemperatur von 65°C 192 cm, gemessen analog den Angaben des Beispiels 5.

Die Anfangshärte, gemessen 40 Sek. nach Öffnung des Formwerkzeugs, war 47 Shore D

An dem eine Stunde bei 160°C getemperten Formteil wurden folgende mechanische Daten gemessen:

| | | |
|---|---|---|
| Rohdichte | DIN 53420 [kg/m³] | 1124 |
| Reißfestigkeit | DIN 53504 [N/mm²] | 30 |
| Reißdehnung | DIN 53504 [%] | 103 |
| Weiterreißfestigkeit | DIN 53515 [N/mm²] | 17 |
| Härte | DIN 53505 [Shore D] | 72 |
| Biege-E-Modul | DIN 53457 [N/mm²] | 748 |
| Wärmeformbeständigkeit (HDT) nach ISO-75/B | DIN 53461 [°C] | ~160 |

Beispiel 8

A-Komponente:

Mischung aus

67,0 Gew.-Teilen N,N'-Dibenzyl-polyoxypropylen-diamin, hergestellt nach den Angaben der Beispiele 1a und 1b

29,0 Gew.-Teilen DETDA,

2,0 Gew.-Teilen Zinkstearat und

2,0 Gew.-Teilen N,N'-Polyoxypropylen-dicyclohexylimin, hergestellt durch Umsetzung eines Polyoxypropylen-diamins mit einem mittleren Molekulargewicht von 230 und mehr als 91 % primären Aminogruppen und Cyclohexanon.

B-Komponente: analog Beispiel 5

Die Komponenten A und B wurden im Mischungsverhältnis A:B = 100:93,9 Gew.-Teilen analog den Angaben des Beispiels 5 zu Formteilen umgesetzt.

Der Fließweg der Reaktionsmischung betrug bei einer Formtemperatur von 65 °C 195 cm, gemessen analog den Angaben des Beispiels 5.

Die Anfangshärte, gemessen 40 Sek. nach Öffnung des Formwerkzeugs, ergab einen Wert von 48 Shore D

An dem eine Stunde bei 160 °C getemperten Formteil wurden folgende mechanische Daten gemessen:

| | | |
|---|---|---|
| Rohdichte | DIN 53420 [kg/m$^3$] | 1134 |
| Reißfestigkeit | DIN 53504 [N/mm$^2$] | 30 |
| Reißdehnung | DIN 53504 [%] | 124 |
| Weiterreißfestigkeit | DIN 53515 [N/mm$^2$] | 26 |
| Härte | DIN 53505 [Shore D] | 71 |
| Biege-E-Modul | DIN 53457 [N/mm$^2$] | 659 |
| Wärmeformbeständigkeit (HDT) nach ISO-75/B | DIN 53461 [°C] | 162 |

Vergleichsbeispiel I

A-Komponente:

Mischung aus

15 Gew.-Teilen N,N'-Polyoxypropylen-dicyclopentylimin, hergestellt nach den Angaben des Beispiels 3a,

52,0 Gew.-Teilen Polyoxypropylen-diamin mit einem mittleren Molekulargewicht von 2000 und mindestens 91 % primären Aminogruppen,

29,0 Gew.-Teilen DETDA,

2,0 Gew.-Teilen Zinkstearat und

2,0 Gew.-Teilen N,N'-Polyoxypropylen-dicyclohexylimin, hergestellt durch Umsetzung eines Polyoxypropylen-diamins mit einem mittleren Molekulargewicht von 230 und mehr als 91 % primären Aminogruppen und Cyclohexanon.

B-Komponente: analog Beispiel 5

Die Komponenten A und B wurden im Mischungsverhältnis A:B = 100:94,7 Gew.-Teilen analog den Angaben des Beispiels 5 zu Formteilen umgesetzt.

Der Fließweg der Reaktionsmischung betrug bei einer Formtemperatur von 65 °C 158 cm, gemessen analog den Angaben des Beispiels 5.

Die Anfangshärte, gemessen 40 Sek. nach Öffnung des Formwerkzeugs, ergab einen Wert von 51 Shore D

An dem eine Stunde bei 160 °C getemperten Formteil wurden folgende mechanische Daten gemessen:

| | | |
|---|---|---|
| Rohdichte | DIN 53420 [kg/m$^3$] | 1104 |
| Reißfestigkeit | DIN 53504 [N/mm$^2$] | 30 |
| Reißdehnung | DIN 53504 [%] | 128 |
| Weiterreißfestigkeit | DIN 53515 [N/mm$^2$] | 21 |
| Härte | DIN 53505 [Shore D] | 72 |
| Biege-E-Modul | DIN 53457 [N/mm$^2$] | 706 |
| Wärmeformbeständigkeit (HDT) nach ISO-75/B | DIN 53461 [°C] | 162 |

Vergleichsbeispiel II

A-Komponente:

Mischung aus

41,1 Gew.-Teilen N,N'-Polyoxypropylen-dicyclopentylimin, hergestellt nach den Angaben des Beispiels 3a,
25,5 Gew.-Teilen Polyoxypropylen-diamin mit einem mittleren Molekulargewicht von 2000 und mindestens 91 % primären Aminogruppen,
29,0 Gew.-Teilen DETDA,
2,0 Gew.-Teilen Zinkstearat und
2,0 Gew.-Teilen N,N'-Polyoxypropylen-dicyclohexylimin, hergestellt durch Umsetzung eines Polyoxypropylen-diamins mit einem mittleren Molekulargewicht von 230 und mehr als 91 % primären Aminogruppen und Cyclohexanon.

B-Komponente: analog Beispiel 5

Die Komponenten A und B wurden im Mischungsverhältnis A:B = 100:93,5 Gew.-Teilen analog den Angaben des Beispiels 5 zu Formteilen umgesetzt.
Der Fließweg der Reaktionsmischung betrug bei einer Formtemperatur von 65 °C 166 cm, gemessen analog den Angaben des Beispiels 5.
Die Anfangshärte, gemessen 40 Sek. nach Öffnung des Formwerkzeugs, war 50 Shore D
An dem eine Stunde bei 160 °C getemperten Formteil wurden folgende mechanische Daten gemessen:

| | | |
|---|---|---|
| Rohdichte | DIN 53420 [kg/m$^3$] | 1104 |
| Reißfestigkeit | DIN 53504 [N/mm$^2$] | 30 |
| Reißdehnung | DIN 53504 [%] | 110 |
| Weiterreißfestigkeit | DIN 53515 [N/mm$^2$] | 17 |
| Härte | DIN 53505 [Shore D] | 73 |
| Biege-E-Modul | DIN 53457 [N/mm$^2$] | 724 |
| Wärmeformbeständigkeit (HDT) nach ISO-75/B | DIN 53461 [°C] | 160 |

**Patentansprüche**

**1.** Verfahren zur Herstellung von elastischen Formkörpern auf der Grundlage von N-substituierte Harnstoff- und Amidgruppen gebunden enthaltenden Elastomeren durch Umsetzung von
a) mindestens einem organischen und/oder modifizierten organischen Polyisocyanat mit
b) einer polyazomethinhaltigen Polyoxyalkylen-polyamin-Mischung und
c) mindestens einem alkylsubstituierten primären aromatischen Diamin, das in ortho-Stellung zu den Aminogruppen mindestens einen Alkylsubstituenten besitzt mit einem Molekulargewicht bis 500
in Gegenwart oder Abwesenheit von
d) Katalysatoren
dadurch gekennzeichnet, daß die polyazomethinhaltige Polyoxyalkylen-polyamin-Mischung (b) enthält:
bi) mindestens ein Polyazomethin, ausgewählt aus Reaktionsprodukten aus Polyoxyalkylen-polyaminen mit 2 bis 4 an aromatische oder aliphatische Reste gebundenen primären Azninogruppen und einem durchschnittlichen Molekulargewicht von 1100 bis 8000 und mindestens einem organischen Aldehyd und/oder organischen Keton
bii) mindestens ein Polyoxyalkylen-polyamin mit einem Molekulargewicht von 1100 bis 8000 und 2 bis 4 endständig gebundenen sekundären Aminogruppen der Formel RNH-, wobei R ein linearer oder verzweigter Alkylrest mit 1 bis 12 Kohlenstoffatomen, ein Cycloalkylrest mit 4 bis 10 Kohlenstoffatomen, der Benzylrest, ein mit Halogenatomen, vorzugsweise Fluor- oder Chloratomen, Nitro-, Alkyl- oder Alkoxygruppen mit 1 bis 12 Kohlenstoffatomen, oder Ainino- oder Carboxylgruppen an der Phenylgruppe substituierter Benzylrest, der Phenylrest oder eine Alkylphenylgruppe mit 1 bis 12 Kohlenstoffatomen im Alkylrest ist und gegebenenfalls

biii) mindestens ein Polyoxyalkylen-polyamin mit 2 bis 4 endständigen primären Aminogruppen und einem Molekulargewicht von 1100 bis 8000.

2. Verfahren nach Anspruch 1, dadurch gekennzeichnet, daß man als sekundäre Polyoxyalkylen-polyamine N,N'-Dibenzyl-polyoxyalkylen-diamine,N,N',N''-Tribenzylpolyoxyalkylen-triamine oder Mischungen dieser N-benzylsubstituierten Polyoxyalkylen-di- und -triamine verwendet, wobei die Oxyalkylenreste ausgewählt sind aus der Gruppe der Polyoxypropylen-, Polyoxytetramethylen-, Polyoxypropylen-polyoxyethylen-, Polyoxytetramethylen-polyoxyethylen- und/oder -polyoxypropylenreste.

3. Verfahren nach Anspruch 1 oder 2, dadurch gekennzeichnet, daß das Verhältnis von Aldimin- und/oder Ketimingruppen zu sekundären Aminogruppen in der polyazomethinhaltigen Polyoxyalkylen-polyamin-Mischung (b) kleiner als 1 ist.

4. Verfahren nach einem der Ansprüche 1 bis 3, dadurch gekennzeichnet, daß die polyazomethinhaltige Polyoxyalkylen-polyamin-Mischung (b) enthält:
9 bis 49 % Aldimin- und/oder Ketimingruppen,
20 bis 91 % endständige sekundäre Aminogruppen und
0 bis 71 % endständige primäre Aminogruppen,
wobei die Prozente bezogen sind auf die Gesamtzahl an Aldimin-, Ketimingruppen, endständigen sekundären und endständigen primären Aminogruppen der Polyoxyalkylen-polyamin-Mischung (b) und (bi) bis (biii) jeweils ein durchschnittliches Molekulargewicht von 2000 bis 3000 besitzen.

5. Verfahren nach einem der Ansprüche 1 bis 4, dadurch gekennzeichnet, daß die Polyoxyalkylen-polyamin-Mischungen (b), bezogen auf 100 Gew.-Teile (b), enthalten:
6 bis 59 Gew.-Teile mindestens eines Polyazomethins (bi),
11 bis 94 Gew.-Teile mindestens eines Polyoxyalkylen-polyamins mit endständigen sekundären Aminogruppen (bii) und
0 bis 79 Gew.-Teile mindestens eines Polyoxyalkylen-polyamins (biii) mit endständigen primären Aminogruppen,
wobei (bi) bis (biii) jeweils ein durchschnittliches Molekulargewicht von 2000 bis 3000 besitzen.

6. Verfahren nach einem der Ansprüche 1 bis 5, dadurch gekennzeichnet, daß man die elastischen, kompakten Formkörper nach dem one shot-Verfahren mit Hilfe der RIM-Technik in einem geschlossenen Formwerkzeug herstellt.

7. Verfahren zur Herstellung von elastischen, zelligen Formkörpern nach einem der Ansprüche 1 bis 6, dadurch gekennzeichnet, daß man die Umsetzung in Gegenwart von
e) Treibmitteln
nach der RIM-Technik und unter Verdichtung in einem geschlossenen Formwerkzeug durchführt.

8. Verfahren nach einem der Ansprüche 1 bis 7, dadurch gekennzeichnet, daß zur Herstellung der elastischen, kompakten oder zelligen Formkörper auf der Grundlage von N-substituierte Harnstoff- und Amidgruppen gebunden enthaltenden Elastomeren zusätzlich
f) Hilfsmittel und/oder
g) Zusatzstoffe
ausgewählt aus der Gruppe der oberflächenaktiven Substanzen, Schaumstabilisatoren, Zellregler, Füllstoffe, Verstärkungsmittel, Flammschutzmittel, äußeren und/oder inneren Trennmittel, Farbstoffe, Pigmente, Hydrolyseschutzmittel, fungistatisch und bakteriostatisch wirkenden Substanzen mitverwendet werden.

9. Verfahren nach einem der Ansprüche 1 bis 8, dadurch gekennzeichnet, daß man als modifizierte organische Polyisocyanate (a) Polyisocyanatmischungen mit einem NCO-Gehalt von 8 bis 33,6 Gew.-% verwendet, die enthalten:
ai) Carbodiimid- und/oder Urethangruppen enthaltende Polyisocyanate aus 4,4'-Diphenylmethan-diisocyanat oder einer Mischung aus 4,4'- und 2,4'-Diphenylmethan-diisocyanaten mit einem NCO-Gehalt von 8 bis 33,6 Gew.-% und/oder
aii) ein NCO-Gruppen enthaltendes Prepolymer mit einem NCO-Gehalt von 8 bis 25 Gew.-%, bezogen auf das Prepolymergewicht, hergestellt durch Umsetzung von Polyoxyalkylen-polyolen mit

einer Funktionalität von 2 bis 4 und einem Molekulargewicht von 600 bis 6000 mit 4,4'-Diphenylmethan-diisocyanat oder einer Mischung aus 4,4'- und 2,4'-Diphenylmethan-diisocyanaten.

**10.** Verfahren nach einem der Ansprüche 1 bis 9, dadurch gekennzeichnet, daß man als alkylsubstituierte aromatische Polyamine (c) aromatische Diamine verwendet, die mindestens einen Alkylsubstituenten in ortho-Stellung zu jeder Aminogruppe gebunden enthalten und ausgewählt sind aus der Gruppe der 1,3,5-Triethyl-2,4-phenylen-diamin, 1-Methyl-3,5-diethyl-2,4- und/oder -2,6-phenylendiamin, 3,3'-Dialkyl-4,4'-diamino-diphenylmethane mit 1 bis 4 C-Atomen im Alkylrest und 3,3',5,5'-Tetraalkyl-4,4'-diamino-diphenylmethane mit 1 bis 4 C-Atomen im Alkylrest oder Mischungen aus mindestens zwei der genannten alkylsubstituierten aromatischen Diamine.

**11.** Verfahren nach einem der Ansprüche 1 bis 10, dadurch gekennzeichnet, daß man die polyazomethinhaltigen Polyoxyalkylen-polyamin-Mischungen (b) und alkylsubstituierten aromatischen Polyamine (c) in solchen Mengen verwendet, daß das Verhältnis von Aldimin- und/oder Ketimingruppen und sekundären Aminogruppen oder von Aldimin- und/oder Ketimingruppen, sekundären und primären Aminogruppen der Aufbaukomponente (b) zu primären aromatischen Aminogruppen der Aufbaukomponente (c) 90:10 bis 10:90 beträgt.

**12.** Polyazomethinhaltige Polyoxyalkylen-polyamin-Mischungen (b), bestehend, bezogen auf 100 Gew.-Teile (b), aus
6 bis 59 Gew.-Teilen mindestens eines Polyazomethins (bi), wie in Anspruch 1 definiert,
11 bis 94 Gew.-Teilen mindestens eines Polyoxyalkylen-polyamins mit 2 bis 4 endständigen gebUndenen sekundären Aminogruppen den Formel RNH-(bii), wobei R wie in Anspruch 1 definiert ist, und
0 bis 79 Gew.-Teilen mindestens eines Polyoxyalkylen-polyamins (biii) mit 2 bis 4 endständigen primären Aminogruppen,
wobei (bi) bis (biii) jeweils ein durchschnittliches Molekulargewicht von 2000 bis 3000 besitzen,
und enthaltend, Prozente bezogen auf die Gesamtzahl an Aldimin- und/oder Ketimingruppen, endständigen sekundären und primären Aminogruppen in der Polyoxyalkylen-polyamin-Mischung (b),
9 bis 49 % Aldimin- und/oder Ketimingruppen,
20 bis 91 % endständige sekundäre Aminogruppen und
0 bis 71 % endständige primäre Aminogruppen,

**13.** Polyazomethinhaltige Polyoxyalkylen-polyamin-Mischungen (b) nach Anspruch 12, dadurch gekennzeichnet, daß diese als Polyazomethine (bi) Polyketimine enthalten, die hergestellt werden durch Umsetzung von Polyoxyalkylen-polyaminen mit einer Funktionalität von 2 bis 4 und einem Molekulargewicht von 180 bis 8000, ausgewählt aus der Gruppe Polyoxyethlyenpolyamine, Polyoxypropylen-polyamin, Polyoxytetramethylen-polyamine, Polyoxypropylen-polyoxyethylen-polyamine, mit aliphatischen und/oder cycloaliphatischen Ketonen, ausgewählt aus der Gruppe Methylisobutylketon, Methylcyclohexanon und vorzugsweise Cyclohexanon und Cyclopentanon.

**14.** Polyazomethinhaltige Polyoxyalkylen-polyamin-Mischungen (b) nach einem der Ansprüche 12 oder 13, dadurch gekennzeichnet, daß diese als sekundäre Polyoxyalkylen-polyamine N,N'-Dibenzyl-polyoxyalkylen-diamine, N,N',B''-Tribenzylpolyoxyalkylen-triamine oder Mischungen dieser N-benzylsubstituierten Polyoxyalkylen-di- und -triamine enthalten, wobei die Oxyalkylenreste ausgewählt sind aus der Gruppe der Polyoxypropylen-, Polyoxytetramethylen-, Polyoxypropylen-polyoxyethylen-, Polyoxytetramethylen-polyoxyethylen- und/oder -polyoxypropylenreste.

**15.** N-substituierte Harnstoffgruppen und Amidgruppen gebunden enthaltende, elastische, kompakte oder zellige Elastomere, hergestellt durch Umsetzung von
a) mindestens einem organischen und/oder modifizierten organischen Polyisocyanat mit
b) einer polyazomethinhaltigen Polyoxyalkylen-polyamin-Mischung (b), die enthält:
bi) mindestens ein Polyaldimin und/oder Polyketimin wie in Anspruch 1 definiert
bii) mindestens ein Polyoxyalkylen-polyamin mit endständigen sekundären Aminogruppen wie in Anspruch 1 definiert und gegebenenfalls
biii) mindestens ein Polyoxyalkylen-polyamin mit endständigen primären Aminogruppen wie in Anspruch 1 definiert
und

c) mindestens einem alkylsubstituierten aromatischen Polyamin mit einem Molekulargewicht bis 500, wie in Anspruch 1 definiert

in Gegenwart oder Abwesenheit von

d) Katalysatoren sowie gegebenenfalls

e) Treibmitteln,

f) Hilfsmitteln und/oder

g) Zusatzstoffen, ausgewählt aus der in Anspruch 8 definierten Gruppe

mit der Maßgabe, daß das Verhältnis von Aldimin- und/oder Ketimingruppen zu sekundären Aminogruppen in (b) kleiner als 1 ist.

## Claims

**1.** A process for the production of elastic moldings based on elastomers containing N-substituted urea and amide groups in bound form, by reacting

a) one or more organic and/or modified organic polyisocyanates with

b) a polyazomethine-containing polyoxyalkylene-polyamine mixture and

c) one or more alkyl-substituted primary aromatic diamines which contain, in the ortho-position to the amino groups, one or more alkyl substituent and have a molecular weight of up to 500,

in the presence or absence of

d) catalysts,

wherein the polyazomethine-containing polyoxyalkylene-polyamine mixture (b) contains:

bi) one or more polyazomethines selected from products of the reaction of polyoxyalkylene-polyamines having from 2 to 4 primary amino groups bonded to aromatic or aliphatic radicals and having a mean molecular weight of from 1100 to 8000, and one or more organic aldehyde and/or organic ketones,

bii) one or more polyoxyalkylene-polyamines having a molecular weight of from 1100 to 8000 and having from 2 to 4 terminal secondary amino groups of the formula RNH- where R is linear or branched alkyl having from 1 to 12 carbon atoms, cycloalkyl having from 4 to 10 carbon atoms, benzyl, benzyl which is substituted on the phenyl by halogen, preferably fluorine or chlorine, by nitro, alkyl or alkoxy having from 1 to 12 carbon atoms or by amino or carboxyl, or phenyl or alkylphenyl having from 1 to 12 carbon atoms in the alkyl, and, if desired,

biii) one or more polyoxyalkylene-polyamines containing from 2 to 4 terminal primary amino groups and having a molecular weight of from 1100 to 8000.

**2.** A process as claimed in claim 1, wherein the secondary polyoxyalkylene-polyamine used is an N,N'-dibenzylpolyoxyalkylenediamine, an N,N'N''-tribenzylpolyoxyalkylenetriamine or a mixture of these N-benzylsubstituted polyoxyalkylenediamines or -triamines, the oxyalkylene being selected from the group consisting of polyoxypropylene, polyoxytetramethylene, polyoxypropylene-polyoxyethylene, polyoxytetramethylene-polyoxyethylene and/or polyoxypropylene.

**3.** A process as claimed in claim 1 or 2, wherein the ratio between the aldimine and/or ketimine groups and secondary amino groups in the polyazomethine-containing polyoxyalkylene-polyamine mixture (b) is less than 1.

**4.** A process as claimed in claim 1 or 2 or 3, wherein the polyazomethine-containing polyoxyalkylene-polyamine mixture (b) contains:

from 9 to 49% of aldimine and/or ketimine groups

from 20 to 91% of terminal secondary amino groups and

from 0 to 71% of terminal primary amino groups,

where the percentages are based on the total number of aldimine groups, ketimine groups, terminal secondary and terminal primary amino groups in the polyoxyalkylenepolyamine mixture (b), and (bi) to (biii) each have a mean molecular weight of from 2000 to 3000.

**5.** A process as claimed in claim 1 or 2 or 3 or 4, wherein the polyoxyalkylene-polyamine mixture (b) contains, based on 100 parts by weight of (b):

from 6 to 59 parts by weight of one or more polyazomethine (bi),

from 11 to 94 parts by weight of one or more polyoxyalkylene-polyamine (bii) containing terminal secondary amino groups and

from 0 to 79 parts by weight of one or more polyoxyalkylene-polyamine (biii) containing terminal primary amino groups,
where (bi) to (biii) each have a mean molecular weight of from 2000 to 3000.

**6.** A process as claimed in claim 1 or 2 or 3 or 4 or 5, wherein the elastic, compact moldings are produced by the one-shot process using the RIM method in a closed mold.

**7.** A process for the production of elastic cellular moldings as claimed in claim 1 or 2 or 3 or 4 or 5 or 6, wherein the reaction is carried out in the presence of
e) blowing agents
using the RIM method and with compaction in a closed mold.

**8.** A process as claimed in claim 1 or 2 or 3 or 4 or 5 or 6 or 7, wherein the production of the elastic, compact or cellular moldings based on elastomers containing N-substituted urea and amide groups in bound form is carried out in the additional presence of
f) auxiliaries and/or
g) additives selected from the group consisting of surfactants, foam stabilizers, cell regulators, fillers, reinforcing agents, flameproofing agents, external and/or internal release agents, dyes, pigments, hydrolysisprotection agents, and fungistatic and bacteriostatic substances.

**9.** A process as claimed in claim 1 or 2 or 3 or 4 or 5 or 6 or 7 or 8, wherein the modified organic polyisocyanate (a) used is a polyisocyanate mixture having an NCO content of from 8 to 33.6% by weight which contains:
ai) a carbodiimide- and/or urethane-containing polyisocyanate made from 4,4'-diphenylmethane diisocyanate or a mixture of 4,4'- and 2,4'-diphenylmethane diisocyanates and having an NCO content of from 8 to 33.6% by weight, and/or
aii) an NCO-containing prepolymer having an NCO content of from 8 to 25% by weight, based on the weight of the prepolymer, and prepared by reacting a polyoxyalkylene-polyol having a functionality of from 2 to 4 and a molecular weight of from 600 to 6000 with 4,4'-diphenylmethane diisocyanate or a mixture of 4,4'- and 2,4'-diphenylmethane diisocyanates.

**10.** A process as claimed in claim 1 or 2 or 3 or 4 or 5 or 6 or 7 or 8 or 9, wherein the alkyl-substituted aromatic polyamine (c) used is an aromatic diamine which contains one or more alkyl substituent in bound form in the ortho-position to each amino group and is selected from the group consisting of 1,3,5-triethyl-2,4-phenylenediamine, 1-methyl-3,5-diethyl-2,4- and/or -2,6-phenylenediamine, 3,3'-dialkyl-4,4'-diaminodiphenylmethanes having from 1 to 4 carbon atoms in the alkyl, and 3,3',5,5'-tetraalkyl-4,4'-diaminodiphenylmethanes having from 1 to 4 carbon atoms in the alkyl, or mixtures of two or more of the alkyl-substituted aromatic diamines mentioned.

**11.** A process as claimed in claim 1 or 2 or 3 or 4 or 5 or 6 or 7 or 8 or 9 or 10, wherein the polyazomethinecontaining polyoxyalkylene-polyamine mixture (b) and the alkyl-substituted aromatic polyamine (c) are used in such an amount that the ratio between the aldimine and/or ketimine and secondary amino groups or between the aldimine and/or ketimine groups and secondary and primary amino groups of synthesis component (b) and the primary aromatic amino groups of synthesis component (c) is from 90:10 to 10:90.

**12.** A polyazomethine-containing polyoxyalkylenepolyamine mixture (b) comprising, based on 100 parts by weight of (b),
from 6 to 59 parts by weight of one or more polyazomethine (bi) as defined in claim 1,
from 11 to 94 parts by weight of one or more polyoxyalkylene-polyamine (bii) containing from 2 to 4 terminal secondary amino groups of the formula RNH- (bii), where R is as defined in claim 1, and
from 0 to 79 parts by weight of one or more polyoxyalkylene-polyamine (biii) containing from 2 to 4 terminal primary amino groups,
where (bi) to (biii) each have a mean molecular weight of from 2000 to 3000,
and containing, with the percentages based on the total number of aldimine and/or ketimine groups and terminal secondary and primary amino groups in the polyoxyalkylene-polyamine mixture (b),
from 9 to 49% of aldimine and/or ketimine groups,
from 20 to 91% of terminal secondary amino groups and

from 0 to 71% of terminal primary amino groups.

13. A polyazomethine-containing polyoxyalkylenepolyamine mixture (b) as claimed in claim 12, which contains, as polyazomethine (bi), a polyketimine prepared by reacting a polyoxyalkylene-polyamine having a functionality of from 2 to 4 and a molecular weight of from 180 to 8000, selected from the group consisting of polyoxyethylene-polyamines, polyoxypropylene-polyamines, polyoxytetramethylene-polyamines and polyoxypropylene-polyoxyethylene-polyamines with an aliphatic and/or cycloaliphatic ketone selected from the group comprising methyl isobutyl ketone, methylcyclohexanone and preferably cyclohexanone and cyclopentanone.

14. A polyazomethine-containing polyoxyalkylene-polyamine mixture (b) as claimed in claim 12 or 13, wherein the secondary polyoxyalkylene-polyamine is an N,N'-dibenzylpolyoxyalkylenediamine, an N,N',N''-tribenzylpolyoxyalkylenetriamineor a mixture of these N-benzyl-substituted polyoxyalkylene-diamines and -triamines, where the oxyalkylene radicals are selected from the group comprising polyoxypropylene, polyoxytetramethylene, polyoxypropylene-polyoxyethylene, polyoxytetramethylenepolyoxyethylene and/or -polyoxypropylene.

15. An elastic, compact or cellular elastomer containing N-substituted urea groups and amide groups in bound form and prepared by reacting
   a) one or more organic and/or modified organic polyisocyanates with
   b) a polyazomethine-containing polyoxyalkylene-polyamines mixture which contains:
      bi) one or more polyaldimine and/or polyketimine as defined in claim 1,
      bii) one or more polyoxyalkylene-polyamines containing terminal secondary amino groups as defined in claim 1, and, if desired,
      biii) one or more polyoxyalkylene-polyamines containing terminal primary amino groups as defined in claim 1,

   and
   c) one or more alkyl-substituted aromatic polyamines having a molecular weight of up to 500, as defined in claim 1,

   in the presence or absence of
   d) catalysts and, if appropriate,
   e) blowing agents,
   f) auxiliaries and/or
   g) additives selected from the group defined in claim 8,

   with the proviso that the ratio between the aldimine and/or ketimine groups and the secondary amino groups (b) is less than 1.

**Revendications**

1. Procédé de fabrication de corps moulés élastiques à base d'élastomères contenant, liés, des groupes urée et amide N-substitués, par réaction de
   a) au moins un polyisocyanate organique et/ou organique modifié avec
   b) un mélange polyoxyalkylène-polyamine à teneur en polyazométhine et
   c) au moins une diamine aromatique primaire substituée par alkyle qui possède au moins un substituant alkyle en position ortho par rapport aux groupes amino, avec un poids moléculaire jusqu'à 500 en présence ou absence de
   d) catalyseurs,

   caractérisé par le fait que le mélange polyoxyalkylène-polyamine à teneur en polyazométhine (b) contient
   bi) au moins un polyazométhine, choisi parmi les produits de réaction de polyoxyalkylène-polyamines avec 2 à 4 groupes amino primaires liés sur des restes aromatiques ou aliphatiques et un poids moléculaire moyen de 1100 à 8000 et au moins un aldéhyde organique et/ou cétone organique,
   bii) au moins une polyoxyalkylène-polyamine d'un poids moléculaire de 1100 à 8000 et 2 à 4 groupes amino secondaires liés en position d'extrémité, de formule RNH, R étant un reste alkyle de 1 à 12 atomes de carbone, linéaire ou ramifié, un reste cycloalkyle de 4 à 10 atomes de carbone, le reste benzyle, un reste benzyle substitué sur le groupe phényle avec des atomes d'halogène, de préférence des atomes de fluor ou de chlore, des groupes nitro, alkyle ou alcoxy de 1 à 12 atomes de carbone ou des groupes amino ou carboxyle, le reste phényle ou un groupe alkylphényle de 1 à

12 atomes de carbone dans le reste alkyle et éventuellement
biii) au moins une polyoxyalkylène-polyamine de 2 à 4 groupes amino primaires en position d'extrémité et un poids moléculaire de 1100 à 8000.

**2.** Procédé selon la revendication 1, caractérisé par le fait que l'on utilise comme polyoxyalkylène-polyamines secondaires des N,N'-dibenzyl-polyoxyalkylène-diamines, N,N',N''-tribenzylpolyoxyalkylènetriamines ou mélanges de ces polyoxyalkylène-di- et -triamines N-benzylsubstituées, les restes oxyalkylène étant choisis dans le groupe des restes polyoxypropylène, polyoxytétraméthylène, polyoxypropylène-polyoxyéthylène, polyoxytétraméthylène-polyoxyéthylène et/ou polyoxypropylène.

**3.** Procédé selon la revendication 2, caractérisé par le fait que le rapport des groupes aldimine et/ou cétimine aux groupes amino secondaires dans le mélange polyoxyalkylène-polyamino à teneur en polyazométhine (b) est inférieur à 1.

**4.** Procédé selon l'une des revendications 1 à 3, caractérisé par le fait que le mélange polyoxyalkylène-polyamine à teneur en polyazométhine (b) contient :
9 à 49 % en poids de groupes aldimine et/ou cétimine,
20 à 91 % de groupes amino secondaires en position d'extrémité et
0 à 71 % de groupes amino primaires en position d'extrémité,
les pourcentages étant rapportés au nombre total des groupes aldimine, cétimine, amino primaires et secondaires en position d'extrémité du mélange polyoxyalkylène-polyamine (b) et (bi) à (bii) chacun possédant un poids moléculaire moyen de 2000 à 3000.

**5.** Procédé selon l'une des revendications 1 à 4, caractérisé par le fait que les mélanges polyoxyalkylène-polyamine (b) contiennent, rapportés aux 100 parties en poids (b) :
6 à 59 parties en poids d'au moins une polyazométhine (bi),
11 à 94 parties en poids d'au moins une polyoxyalkylène-polyamine à groupes amino secondaires en position d'extrémité (bii) et
0 à 79 parties en poids d'au moins une polyoxyalkylène-polyamine (biii) à groupes amino primaires en position d'extrémité,
(bi) à (biii) possédant chacun un poids moléculaire moyen de 2000 à 3000.

**6.** Procédé selon l'une des revendications 1 à 5, caractérisé par le fait que l'on fabrique les corps moulés compacts, élastiques selon le procédé one-shot, à l'aide de la technique RIM dans un moule fermé.

**7.** Procédé de fabrication de corps moulés cellulaires élastiques selon l'une des revendications 1 à 6, caractérisé par le fait que l'on effectue la réaction en présence de
e) gonflants
selon la technique RIM et en comprimant dasn un moule fermé.

**8.** Procédé selon l'une des revendications 1 à 7, caractérisé par le fait que pour la fabrication de corps moulés élastiques, compacts ou cellulaires à base d'élastomères contenant, liés, des groupes urée et amide N-substitués, sont utilisés additionnellement conjointement
f) des auxiliaires et/ou
g) des additifs
choisis dans le groupe des substances tensioactives, stabilisants des mousses, régulateurs des cellules, charges, agents de renforcement, agents ignifuges, agents de séparation externes et/ou internes, colorants, pigments, protecteurs d'hydrolyse, substances à action fongistatique et bactériostatique.

**9.** Procédé selon l'une des revendications 1 à 8, caractérisé par le fait que l'on utilise, comme polyisocyanates organiques modifiés (a), des mélanges de polyisocyanates d'une teneur en NCO de 8 à 33,6 % en poids, qui contiennent
ai) des polyisocyanates contenant des groupes carbodiimide et/ou uréthanne, à partir de 4,4-diphénylméthane-diisocyanate ou d'un mélange de 4,4'- et 2,4'-diphényluréthane-diisocyanates d'une teneur en NCO de 8 à 33,6 % en poids et/ou
aii) un prépolymère à groupes NCO d'une teneur en NCO de 8 à 25 % en poids, rapportée au poids de prépolymère, préparé par réaction de polyoxyalkylène-polyols d'une fonctionnalité de 2 à 4 et

d'un poids moléculaire de 600 à 6000, avec du 4,4'-diphénylméthane-diisocyanate ou un mélange de 4,4'- et 2,4'-diphénylméthane-diisocyanate.

**10.** Procédé selon l'une des revendications 1 à 9, caractérisé par le fait que l'on utilise comme polyamines aromatiques substituées par alkyle (c), des diamines aromatiques qui contiennent, liés, au moins un substituant alkyle en position ortho pour chaque groupe amino et sont choisies dans le groupe des 1,3,5-triéthyl-2,4-phénylène-diamine, 1-méthyl-3,5-diéthyl-2,4- et/ou -2,6-phénylèndiamine, 3,3'-dialkyl-4,4'-diamino-diphénylméthane de 1 à 4 atomes C dans le reste alkyle et 3,3',5,5'-tétraalkyle-4,4'-diamino-diphénylméthane de 1 à 4 atomes C dans le reste alkyle ou des mélanges d'au moins deux des diamines aromatiques alkylsubstituées indiquées.

**11.** Procédé selon l'une des revendications 1 à 10, caractérisé par le fait que l'on utilise les mélanges de polyoxyalkylène-polyamine à teneur en polyazométhine (b) et de polyamine aromatique alkylsubstituée (c) en quantités telles que le rapport des groupes aldimine et/ou cétimine et groupes amino secondaire ou des groupes aldimine et/ou cétimine, groupes amino secondaires et primaires des composants de la structure (b) aux groupes amino aromatiques primaires des composants de la structure (c) est 90/10 à 10/90.

**12.** Mélanges polyoxyalkylène-polyamine à teneur en polyazométhine (b) constitués, rapportés à 100 parties en poids (b) de
6 à 59 parties en poids d'au moins une polyazométhine (bi) telle que définie dans la revendication 1,
11 à 94 parties en poids d'au moins une polyoxyalkylène-polyamine de 2 à 4 groupes amino secondaires liés en position d'extrémité de la formule RNM (bii), R étant défini comme dans la revendication 1 et
0 à 79 parties en poids d'au moins un polyoxyalkylène-polyamine (bii) de 2 à 4 groupes amino primaires en position d'extrémité,
(bi) à (biii) possédant chacun un poids moléculaire moyen de 2000 à 3000 et contenant, rapportés en pourcentage au nombre total de groupes adimine et/ou cétamine, des groupes amino primaires et secondaires en position d'extrémité dans le mélange de polyoxyalkylène-polyamine (b) 9 à 49 % de groupes admine et/ou cétimine,
20 à 91 % de groupes amino secondaires en position d'extrémité et
0 à 71 % de groupes amino primaires en position d'extrémité.

**13.** Mélanges de polyoxyalkylène-polyamine à teneur en polyazométhine (b) selon la revendication 12, caractérisés par le fait que ceux-ci contiennent, comme polyazométhines (bi) des polycétimines qui sont préparées par réaction de polyoxyalkylène-polyamines d'une fonctionnalité de 2 à 4 d'un poids moléculaire de 180 à 8000, choisis dans le groupe polyoxyéthylène-polyamines, polyoxypropylène-polyamine, polyoxytétraméthylène-polyamines, polyoxypropylène-polyoxyéthylène-polyamines avec des cétones aliphatiques et/ou cycloaliphatiques choisies dans le groupe méthylisobutylcétone, méthylcyclohexanone et de préférence cyclohexanone et cyclopentanone.

**14.** Mélanges de polyoxyalkylène-polyamine à teneur en polyazométhine (b) selon l'une des revendications 12 ou 13, caractérisés par le fait que ceux-ci contiennent, comme polyoxyalkylène-polyamines secondaires, des N,N'-dibenzyl-polyoxyalkylène-diamines, N,N'-B''-tribenzylpolyoxyalkylène-triamines ou de mélange de ces polyoxyalkylène-di- et -triamines N-benzylsubstitués, les restes oxyalkylène étant choisies dans le groupe des restes polyoxypropylène, polyoxytétraméthylène, polyoxypropylène-polyoxyéthylène, polyoxytétraméthylène-polyoxyéthylène et/ou polyoxypropylène.

**15.** Elastomères élastiques, compacts ou cellulaires contenant, liés, des groupes amide et urée N-substitués, fabriqués par réaction de
a) au moins un polyisocyanate organique et/ou organique modifié, avec
b) un mélange en polyazométhine (b) qui contient
(bi) au moins une polyaldimine et/ou polycétimine telles que définies dans la revendication 1,
(bii) au moins une polyoxyalkylène-polyamine à groupes amino secondaires en position d'extrémité telle que définie dans la revendication 1 et evéntuellement
(biii) au moins une polyoxyalkylène-polyamine à groupes amino primaires en position d'extrémité telle que définie dans la revendication 1 et

c) au moins une polyamine aromatique alkylsubstituée d'un poids moléculaire jusqu'à 500, telle que définie dans la revendication 1 en présence ou absence
d) de catalyseurs ainsi qu'éventuellement
e) de gonflants
f) d'auxiliaires et/ou
g) additifs choisis dans le groupe défini dans la revendication 8

sous réserve que le rapport des groupes aldimine et/ou cétimine aux groupes amino secondaires dans (b) soit inférieur à 1.